# EUROPÄISCHE PATENTSCHRIFT

(11) **EP 3 390 123 B1**
(45) Veröffentlichungstag und Bekanntmachung des Hinweises auf die Patenterteilung: **10.03.2021**
(21) Anmeldenummer: 16815802.0
(22) Anmeldetag: 14.12.2016
(51) Int. Cl.: B60D 1/62, B60D 1/60, B60D 1/26, B60D 1/64

(54) **KUPPLUNGSBAUTEIL MIT RELATIV ZUM KUPPLUNGSBAUTEILKÖRPER BEWEGLICHEM STECKER- UND AUSRICHTBAUTEIL ZUR AUTOMATISIERTEN HERSTELLUNG EINER STECKERVERBINDUNG**
COUPLING COMPONENT WITH CONNECTION AND ALIGNMENT COMPONENT THAT CAN MOVE RELATIVE TO THE COUPLING COMPONENT BODY TO AUTOMATICALLY CREATE A PLUG CONNECTION
ÉLÉMENT DE COUPLAGE MUNI D'UN ÉLÉMENT D'ENFICHAGE ET D'ALIGNEMENT MOBILE PAR RAPPORT AU CORPS D'ÉLÉMENT DE COUPLAGE, POUR LA PRODUCTION AUTOMATISÉE D'UNE CONNEXION ENFICHABLE

(30) Priorität: 18.12.2015 DE 102015226094
(43) Veröffentlichungstag der Anmeldung: 24.10.2018
(73) Patentinhaber: JOST-Werke Deutschland GmbH, 63263 Neu-Isenburg (DE)
(72) Erfinder: ALGÜERA, José Manuel, 63739 Aschaffenburg (DE); GITZEN, Stephan, 64560 Riedstadt (DE)
(74) Vertreter: Ruttensperger Lachnit Trossin Gomoll
(86) Internationale Anmeldenummer: PCT/EP2016/080908
(87) Internationale Veröffentlichungsnummer: WO 2017/102800

(56) Entgegenhaltungen:
- DE-A1- 4 412 111
- DE-A1- 10 155 056
- DE-U1-202005 005 676
- US-A- 4 156 551
- US-A1- 2011 221 165

## Beschreibung

Die vorliegende Erfindung betrifft ein Kupplungsbauteil einer Kupplungsvorrichtung zur vorübergehenden Verbindung eines Zugfahrzeugs mit einem Nachlauffahrzeug zur Bildung eines Fahrzeugzuges gemäß dem Oberbegriff des Anspruchs 1.

Die vorliegende Erfindung betrifft ein Kupplungsbauteil einer Kupplungsvorrichtung sowie auch Kupplungsvorrichtungen, mit welchen während oder nach der Herstellung der Kupplungsverbindung automatisiert die Energie oder/und Information übertragende Steckerverbindung herstellbar ist.

Eine Kupplungsvorrichtung mit einem gattungsgemäßen Kupplungsbauteil ist aus der US 4,156,551 bekannt. Eine weitere Kupplungsvorrichtung ist aus der EP 0 434 472 A1 bekannt Aus der DE 20 2005 005 676 U1 ist ebenfalls eine Kupplungsvorrichtung bekannt.

Aus der Druckschrift EP 0 434 472 A1 ist eine Lösung dafür bekannt, ein Zugfahrzeug und ein Nachlauffahrzeug nicht nur über ihre Kupplungsbauteile mechanisch miteinander zu einem Fahrzeugzug kuppeln, sondern auch möglichst automatisiert beim Kupplungsvorgang eine Steckerverbindung herzustellen, durch welche eine Energieversorgung des Fahrzeugzuges ausgehend von einem Fahrzeug aus Zugfahrzeug und Nachlauffahrzeug möglich ist oder/und durch welche Information in Form von Signalen oder/und Daten zwischen Zugfahrzeug und Nachlauffahrzeug übertragen werden können. Der Begriff "Energieversorgung" ist dabei möglichst allgemein zu verstehen. Er umfasst die Versorgung mit elektrischer, pneumatischer und hydraulischer Energie, also Energieformen, die insbesondere an Nutzfahrzeugen verwendet werden. Wenngleich in einem Fahrzeugzug üblicherweise das Nachlauffahrzeug vom Zugfahrzeug aus mit Energie versorgt wird, soll nicht ausgeschlossen sein, dass auch das Zugfahrzeug vom angekuppelten Nachlauffahrzeug ausgehend mit Energie versorgt werden kann, beispielsweise dann, wenn ein Energiespeicher am Nachlauffahrzeug noch mit Energievorrat wenigstens teilweise gefüllt ist, wohingegen - aus welchen Gründen auch immer - ein Vorrat der betreffenden Energieform am Zugfahrzeug erschöpft ist. Dies kann beispielsweise dann eintreten, wenn eine Fahrzeugbatterie am Zugfahrzeug defekt oder vollständig entleert ist, während am Nachlauffahrzeug eine wenigstens teilweise geladene elektrische Batterie vorhanden ist.

Die bekannte Kupplungsvorrichtung ist eine Bolzenkupplung und umfasst ein zugfahrzeugseitiges Ausrichtbauteil in Form eines Vierkant-Dorns, welcher in Dorn-Längsrichtung, durch eine mit dem Dorn verbundene Kolben-Zylinder-Anordnung angetrieben, ausfahrbar und einziehbar ist. Die Dorn-Längsrichtung verläuft parallel zur Zugfahrzeug-Längsrichtung, wobei die Dornspitze zum Nachlauffahrzeug hinweist. Mit dem Dorn als zugfahrzeugseitigem Ausrichtbauteil ist das zugfahrzeugseitige Steckerbauteil starr verbunden. Es umfasst eine sich orthogonal zur Dorn-Längsrichtung erstreckende Platte, welche mit dem Dorn durch Schweißen fest und unlösbar verbunden ist. In der Platte sind Steckerformationen fest aufgenommen.

Das nachlauffahrzeugseitige Ausrichtbauteil der bekannten Kupplungsvorrichtung umfasst eine zur Dorn-Mantelfläche des zugfahrzeugseitigen Ausrichtbauteils im Wesentlichen komplementäre Hülse mit einer dem Zufahrzeug zugewandten Einführhilfe in Form eines Einführtrichters. Mit dem nachlauffahrzeugseitigen Ausrichtbauteil ist das nachlauffahrzeugseitige Steckerbauteil starr verbunden. Dieses umfasst wiederum eine Platte, welche mit der Hülse starr verschweißt ist und deren die Hülse unmittelbar umgebender Plattenbereich sich orthogonal zur Hülsen-Längsrichtung erstreckt. In dieser nachlauffahrzeugseitigen Platte sind nachlauffahrzeugseitige Steckerformationen fest montiert, und zwar an Stellen, welche mit den Steckerformationen am zugfahrzeugseitigen Steckerbauteil dann korrespondieren, wenn der Dorn durch eine Ausfahrbewegung ausreichend tief in die Hülse eingeführt ist.

Das nachlauffahrzeugseitige Steckerbauteil ist starr mit dem Nachlauffahrzeug bzw. mit einer Deichsel des Nachlauffahrzeugs verbunden. Deshalb ist auch das die Hülse umfassende nachlauffahrzeugseitige Ausrichtbauteil starr mit der Deichsel des Nachlauffahrzeugs verbunden. Das zugfahrzeugseitige Steckerbauteil ist zwar starr mit dem zugfahrzeugseitigen Ausrichtbauteil verbunden, dieses ist jedoch durch ein Kugelgelenk mit dem Zugfahrzeug bzw. mit dessen Kupplungsbauteilkörper verbunden und zwar derart, dass die verlängert gedachte Längsmittellinie eines Kupplungsbolzens als Kupplungsglied des zugfahrzeugseitigen Kupplungsbauteils den Kugelmittelpunkt des genannten Kugelgelenks enthält. Das zugfahrzeugseitige Ausrichtbauteil mit dem Steckerbauteil befindet sich unterhalb des Kupplungsbolzens.

Bei der bekannten Kupplungsvorrichtung wird am Ende einer erfolgreichen Ausrichtbewegung des zugfahrzeugseitigen Ausrichtbauteils relativ zum nachlauffahrzeugseitigen Ausrichtbauteil stets die Steckerverbindung hergestellt. Dies erfordert einen relativ langen Hub des Dorns, da der Hub zunächst die Steckerbauteile von Zug- und Nachlauffahrzeug relativ zueinander ausreichend ausrichten muss und, nachdem diese ausreichende Ausrichtung hergestellt ist, für eine Verwirklichung der Steckerverbindung sorgen muss. Der dadurch notwendige lange Ausricht- und Verbindungshub des Dorns erfordert zum einen bereits eine gewisse Vorausrichtung der die Ausrichtbauteile tragenden Kupplungsbauteilkörper beim Herstellen der mechanischen Kupplungsverbindung zur Bildung des Fahrzeugzuges und erfordert zum anderen wegen des großen Hubbetrags einen erheblichen Bewegungsfreiraum, in welchem der Hub kollisionsfrei ablaufen kann.

Die Steckerbauteile der bekannten gattungsgemäßen Kupplungsvorrichtung sind auch dann, wenn sie an keiner Steckerverbindung beteiligt sind, exponiert und äußeren Einflüssen in erheblichem Maße ausgesetzt. Dies gilt vor allem für das nachlauffahrzeugseitige Steckerbauteil wegen seiner Anordnung an einer vom Nachlauffahrzeugkörper auskragenden Deichsel.

Eine weitere Bolzenkupplung ist aus der DE 44 12 111 A1 bekannt. Bei dieser Kupplungsvorrichtung ist das zugfahrzeugseitige Steckerbauteil mit seiner Steckerformation mit dem zugfahrzeugseitigen Kupplungsbauteilkörper verbunden.

Das nachlauffahrzeugseitige Steckerbauteil ist relativ zum nachlauffahrzeugseitigen Kupplungsbauteilkörper, welcher auch bei dieser bekannten Kupplungsvorrichtung durch eine Deichsel gebildet ist, um zwei zueinander parallele und zur Deichsellängsrichtung orthogonale Schwenkachsen schwenkbar. Bei Herstellen der Kupplungsverbindung zwischen zugfahrzeugseitigem und nachlauffahrzeugseitigem Kupplungsbauteil werden das zugfahrzeugseitige Steckerbauteil und das nachlauffahrzeugseitige Steckerbauteil in eine Gegenüberstellung gebracht, in welcher ein am zugfahrzeugseitigen Kupplungsbauteil angeordneter Kulissenantrieb in formschlüssig Kraft übertragende Wirkverbindung mit einem am nachlauffahrzeugseitigen Steckerbauteil vorgesehenen Nocken gelangt. Die Kulisse des Kulissenantriebs ist dabei derart geformt, dass mit fortschreitender Bewegung des Kulissenantriebs die nachlauffahrzeugseitige Steckerformation auf die zugfahrzeugseitige Steckerformation aufgeschoben oder in diese eingeschoben wird und dadurch eine Steckerverbindung zwischen zugfahrzeugseitigem und nachlauffahrzeugseitigem Steckerbauteil hergestellt wird. Das die Kulisse tragende Bauteil des Kulissenantriebs sichert bei hergestellter Steckerverbindung durch Hintergreifen des Nockens des nachlauffahrzeugseitigen Steckerbauteils die Steckerverbindung gegen eine lösende Relativbewegung des nachlauffahrzeugseitigen Steckerbauteils weg vom zugfahrzeugseitigen Steckerbauteil.

Das zugfahrzeugseitige Kupplungsbauteil, welches wie das zugfahrzeugseitige Kupplungsbauteil der gattungsgemäßen Kupplungsvorrichtung als Kupplungsglied einen längs seiner Längsmittelachse beweglichen Kupplungsbolzen aufweist, ist mit dem Kulissenantrieb gekoppelt. Bei einer Verlagerung des Kupplungsbolzens in eine Kupplungsstellung, in der der Kupplungsbolzen eine Zugöse des Nachlauffahrzeugs durchsetzt, wird der Kulissenantrieb in dem oben beschriebenen Sinne zur Herstellung einer Steckerverbindung angetrieben. Ein weiterer Antrieb am zugfahrzeugseitigen Kupplungsbauteil ermöglicht eine Lösebewegung des die Kulisse tragenden Bauteils, sodass der Nocken des nachlauffahrzeugseitigen Steckerbauteils nicht länger hintergriffen wird. Das die Kulisse tragende Bauteil des Kulissenantriebs ist dabei derart bidirektional mit dem Kupplungsbolzen gekoppelt, dass eine Lösebewegung des die Kulisse tragenden Bauteils zur Freigabe des Nockens, um eine Relativbewegung des nachlauffahrzeugseitigen Steckerbauteils weg vom zugfahrzeugseitigen Steckerbauteil zu gestatten, eine Lüftung des Kupplungsbolzens bewirkt, sodass mit der Entriegelung des nachlauffahrzeugseitigen Steckerbauteils auch die mechanische Kupplungsverbindung zwischen zugfahrzeugseitigem und nachlauffahrzeugseitigem Kupplungsbauteil aufgehoben wird. Das Zugfahrzeug kann sich dann vom Nachlauffahrzeug entfernen, wobei die Steckerverbindung spätestens mit diesem Entfernen getrennt wird.

Im Gegensatz zu der aus der DE 44 12 111 A1 bekannten Kupplungsvorrichtung ist die Steckerverbindung der aus der EP 0 434 472 A1 bekannten Kupplungsvorrichtung unabhängig von einer Bewegung des Kupplungsbolzens herstellbar und trennbar.

Bei der aus der DE 44 12 111 A1 bekannten Kupplungsvorrichtung ist das zugfahrzeugseitige Steckerbauteil so über dem Kupplungsbolzen angeordnet, dass es von dessen Längsmittellinie durchsetzt ist. Um ein Abbiegen des Fahrzeugzuges mit hergestellter Steckerverbindung zu ermöglichen, ist entweder das zugfahrzeugseitige Steckerbauteil relativ zum Kupplungsbolzen um dessen verlängert gedachte Längsmittellinie drehbar oder das nachlauffahrzeugseitige Steckerbauteil ist in nicht näher erläuterter Weise horizontal beweglich in einer Spiralfeder aufgenommen.

Auch die Steckerbauteile der aus der DE 44 12 111 A1 bekannten Kupplungsvorrichtung sind stets äußeren Einflüssen ausgesetzt.

Die gattungsgemäße US 4,156,551 offenbart zusätzlich das Merkmal, ein die Steckerformationen von miteinander verbindbaren Steckerbauteilen bei Inaktivität in einer Verstauungsstellung hinter einer Blende zu verbergen. Im Verlauf der Herstellung einer Versorgungsleitungsverbindung treffen während einer Annäherungsbewegung der Steckerbauteile relativ zueinander Betätigungsformationen aufeinander, die bei fortgesetzter Annäherungsbewegung für eine Entfernung der Blenden aus ihrer die Steckerformation abdeckenden Schutzposition sorgen.

Aufgabe der vorliegenden Erfindung ist es, ein gattungsgemäßes Kupplungsbauteil derart weiterzubilden, dass wenigstens die empfindliche Steckerformation seines Steckerbauteils, über welche bei hergestellter Steckerverbindung Energie oder/und Information zwischen den an der Steckerverbindung beteiligten Steckerbauteilen übertragen werden, zu Zeiten des Nichtgebrauchs weiterhin vor äußeren Einflüssen geschützt ist und trotzdem schnell und mit kurzem Bewegungsweg zur Herstellung einer Steckerverbindung bereitgestellt werden kann.

Diese Aufgabe wird erfindungsgemäß gelöst durch ein Kupplungsbauteil mit allen Merkmalen des Anspruchs 1. Bei einem solchen Kupplungsbauteil ist das Steckerbauteil relativ zum Ausrichtbauteil oder/und relativ zum Kupplungsbauteilkörper verschwenkbar zwischen einer Verstauungsstellung, in der seine wenigstens eine Steckerformation für eine Herstellung einer Steckerverbindung nicht zugänglich ist, und einer Verbindungserwartungsstellung, in der seine wenigstens eine Steckerformation für eine Herstellung einer Steckerverbindung zugänglich ist. Die Unzugänglichkeit der Steckerformation für eine Herstellung einer Steckerverbindung in der Verstauungsstellung des Steckerbauteils kann beispielsweise dadurch realisiert sein, dass eine Kontaktierungsseite der Steckerformation, welche bei hergestellter Steckerverbindung von der Steckerformation des weiteren Steckerbauteils kontaktiert ist, in der Verstauungsstellung des Steckerbauteils hinter einer Blende oder Abdeckung verborgen ist. Alternativ oder zusätzlich kann sich das Steckerbauteil in der Verstauungsstellung in einem Gehäuse oder Teilgehäuse befindet, welches das Steckerbauteil oder zumindest seine Steckerformation nach außen abschirmt. Das Steckerbauteil, insbesondere ein Wandabschnitt desselben, kann in seiner Verstauungsstellung in vorteilhafter Weise das Teilgehäuse zu einem Gehäuse ergänzen.

Für die Beschreibung des Kupplungsbauteils der vorliegenden Erfindung und der Kupplungsvorrichtung, zu der es gehören kann, soll auf einen Bezugszustand zurückgegriffen werden, in welchem Zugfahrzeug und Nachlauffahrzeug mit jeweils betriebsbereit anmontierten Kupplungsbauteilen auf einem gemeinsamen ebenen horizontalen Untergrund stehen und in Fahrzeuglängsrichtung aufeinander folgen. Die Fahrzeuglängsmittelebenen beider Fahrzeuge aus Zugfahrzeug und Nachlauffahrzeug sind im Bezugszustand komplanar, sodass auch die Fahrzeuglängsrichtungen beider Fahrzeuge übereinstimmen. Eine Fahrzeuglängsmittelebene im Sinne der vorliegenden Anmeldung ist dabei eine in Fahrzeuglängsrichtung verlaufende und zum Untergrund, auf dem das Fahrzeug steht, (Aufstandsuntergrund) orthogonale Ebene. Im Zweifel verläuft die Fahrzeuglängsmittelebene derart durch das Fahrzeug, dass die Räder einer Achse des Fahrzeugs zu ihr betragsmäßig gleichen Abstand aufweisen. Eine jeweilige Fahrzeug-Längsmittelachse von Zug- und Nachlauffahrzeug verläuft in der Fahrzeuglängsmittelebene des betreffenden Fahrzeugs parallel zum Untergrund.

Sofern in der vorliegenden Anmeldung nichts Abweichendes ausgesagt ist, soll dieser Bezugszustand der Beschreibung der Kupplungsvorrichtung zu Grunde gelegt werden. So kann das Koordinatensystem der Fahrzeuge bzw. des Fahrzeugzuges zur Beschreibung des Kupplungsbauteils und der Kupplungsvorrichtung genutzt werden.

In diesem Bezugszustand sind das zug- und das nachlauffahrzeugseitige Kupplungsbauteil zur Herstellung der Kupplungsverbindung längs einer Kupplungstrajektorie aneinander annäherbar und zur Trennung der Kupplungsverbindung längs der Kupplungstrajektorie voneinander entfernbar. Die Kupplungstrajektorie verläuft daher im Bezugszustand sowohl parallel zum Untergrund als auch parallel zu den komplanaren Fahrzeuglängsmittelebenen. Eine theoretisch-ideale Ausgangsorientierung von zug- und nachlauffahrzeugseitigem Kupplungsbauteil bei Einleitung eines Kupplungsvorgangs zur Herstellung der Kupplungsverbindung ist daher eine Orientierung, bei welcher die Längsmittelachse des nachlauffahrzeugseitigen Kupplungsbauteilkörpers in einer zum Aufstandsuntergrund des Zugfahrzeugs orthogonalen Fahrzeuglängsmittelebene des Zugfahrzeugs liegt und bei welcher die Äquatorebene des nachlauffahrzeugseitigen Kupplungsglieds, die den größten Durchmesser dieses Kupplungsglieds enthält, parallel zum Aufstandsuntergrund orientiert ist.

Ein Zugfahrzeug im Sinne der vorliegenden Anmeldung ist bevorzugt eine motorisch angetriebene selbstfahrende Zugmaschine. Dies muss jedoch nicht so sein. Zugfahrzeug im Sinne der vorliegenden Anmeldung kann jedes Fahrzeug sein, an das ein nachlaufendes Fahrzeug angekuppelt ist. Daher kann in mehrgliedrigen Fahrzeugzügen ein und dasselbe Fahrzeug im Verhältnis zu seinem ihm im Fahrzeugzug vorauseilenden Fahrzeug, an das es angekuppelt ist, Nachlauffahrzeug sein und kann im Verhältnis zu einem ihm nachlaufenden Fahrzeug, das an es angekuppelt ist, Zugfahrzeug sein. Dies trifft beispielsweise ebenso auf Fahrzeugzüge zu, bei welchen an ein selbstfahrendes Zugfahrzeug ein Zentralachsanhänger und an diesen ein Starrdeichselanhänger angekuppelt ist. Dort kann das erfindungsgemäße Kupplungsbauteil Teil einer Kupplungsvorrichtung zwischen dem Zugfahrzeug und dem Zentralachsanhänger oder/und zwischen dem Zentralachsanhänger und dem Stardeichselanhänger angeordnet sein.

Weiterhin soll in der vorliegenden Anmeldung grundsätzlich ein Bauteil A als ein Bauteil B tragend angesehen werden, wenn Bauteil A mit Bauteil B derart konstruktiv verbunden ist, dass die Bewegung des Bauteils B eine Summe aus der Bewegung des Bauteils A und der Relativbewegung des Bauteils B relativ zum Bauteil A ist. Dies schließt auch die relative Unbeweglichkeit der Bauteile A und B ein.

Die Bezugnahme auf das weitere Kupplungsbauteil, umfassend ein weiteres Steckerbauteil und ein dieses tragendes weiteres Ausrichtbauteil erfolgt lediglich zur Erleichterung der Beschreibung des beanspruchten Kupplungsbauteils, das seiner Natur gemäß zur Wechselwirkung mit dem weiteren Kupplungsbauteil ausgebildet ist. Das Kupplungsbauteil kann ein zug- oder ein nachlauffahrzeugseitiges Kupplungsbauteil sein. Das weitere Kupplungsbauteil ist dann das jeweils andere aus zug- und nachlauffahrzeugseitigem Kupplungsbauteil. Entsprechendes gilt für das weitere Ausrichtbauteil und das von diesem getragene weitere Steckerbauteil.

Bei hergestellter Steckerverbindung kontaktieren sich unmittelbar die Steckerformationen von zug- und nachlauffahrzeugseitigem Steckerbauteil. Unmittelbar über die Steckerformationen wird bei hergestellter Steckerverbindung Energie oder/und Information zwischen Zug- und Nachlauffahrzeug übertragen. Eine Steckerformation kann ein männlicher Kontaktstecker und eine dazu passende weitere Steckerformation kann eine weibliche Kontaktbuchse sein. Jedes Steckerbauteil kann ein Steckergestell aufweisen an dem die Steckerformation des Steckerbauteils starr oder relativ zum Steckergestell beweglich aufgenommen ist.

Ebenso kann jedes Ausrichtbauteil ein Ausrichtgestell aufweisen an dem die Ausrichtformation des Ausrichtbauteils starr oder relativ zum Ausrichtgestell beweglich aufgenommen ist.

Von einer Unzugänglichkeit der Steckerformation für die Herstellung einer Steckerverbindung soll beispielsweise immer dann ausgegangen werden, wenn eine körperliche Barriere eine Annäherungsbewegung einer frei beweglichen passenden weiteren Steckerformation an die Steckerformation verhindert, während ohne die körperliche Barriere eine Steckerverbindung grundsätzlich herstellbar wäre.

Bevorzugt ist das Steckerbauteil in die Verstauungsstellung vorgespannt, sodass das Steckerbauteil sich immer dann in der Verstauungsstellung befinden kann, wenn keine äußeren Kräfte oder/und Momente auf es einwirken.

Eine schnelle Bewegung des Steckerbauteils von der Verstauungsstellung in die Verbindungserwartungsstellung mit kurzem Bewegungsweg wird erfindungsgemäß dadurch erreicht, dass das Steckerbauteil zwischen der Verstauungsstellung und der Verbindungserwartungsstellung verschwenkbar ist. Grundsätzlich kann die Verschwenkbarkeit des Steckerbauteils mit einer translatorischen Bewegbarkeit desselben überlagert sein. Um besonders kurze Bewegungswege und damit schnell ausführbare Bewegungen des Steckerbauteils zwischen der Verstauungsstellung und der Verbindungserwartungsstellung realisieren zu können, ist das Steckerbauteil zwischen den genannten Stellungen vorzugsweise ausschließlich verschwenkbar. Um die Schwenkbewegung des Steckerbauteils zwischen den genannten Stellungen möglichst unabhängig von einer Annäherungsbewegung der an der gewünschten Steckerverbindung beteiligten Steckerbauteile zu realisieren, verläuft die Schwenkbewegung des Steckerbauteils bevorzugt um eine Schwenkachse, die orthogonal zur Relativbewegungsrichtung ist, längs welcher das Steckerbauteil und das weitere Steckerbauteil zur Herstellung der Steckerverbindung aneinander annäherbar und zum Lösen derselben voneinander entfernbar sind. Diese Relativbewegungsrichtung ist ohne weiteres aus der Konstruktion des Steckerbauteils, insbesondere seiner Steckerformation, erkennbar. Die Schwenkachse verläuft in dem oben genannten Bezugszustand der beteiligten Fahrzeuge in der Regel in Fahrzeugquerrichtung, also in Richtung der Nickachse. Diese Orientierung der Schwenkachse hat den weiteren Vorteil, dass die so geschaffene Verschwenkbarkeit des Steckerbauteils bei hergestelltem Fahrzeugzug zu einem Ausgleich einer relativen Nickbewegung von Zug- und Nachlauffahrzeug beitragen kann.

Falls das zwischen der Verstauungsstellung und der Verbindungserwartungsstellung verlagerbare Steckerbauteil das nachlauffahrzeugseitige Steckerbauteil ist, das dann bevorzugt auf einer Deichsel als einem nachlauffahrzeugseitiges Kupplungsbauteilkörper vorgesehen ist, kann diese Deichsel in der Regel um eine Parallele zur Gierachse des Nachlauffahrzeugs schwenkbar sein, sodass sich die Orientierung der Schwenkachse des Steckerbauteils zur Verschwenkung zwischen Verstauungs- und Verbindungserwartungsstellung abhängig von der Schwenkstellung der Deichsel ändern kann. Bevorzugt ist die Schwenkachse unabhängig von einer etwaigen Änderung der Schwenkstellung der Deichsel relativ zum Nachlauffahrzeug jedoch stets parallel zum Aufstandsuntergrund des das Kupplungsbauteil und damit das Steckerbauteil tragenden Trägerfahrzeugs aus Zugfahrzeug und Nachlauffahrzeug.

Bevorzugt ist das zwischen der Verstauungsstellung und der Verbindungserwartungsstellung verlagerbare, insbesondere verschwenkbare Steckerbauteil das nachlauffahrzeugseitige Steckerbauteil. Am nachlauffahrzeugseitigen Kupplungsbauteil ist das Steckerbauteil nämlich bei Nichtgebrauch, also beispielsweise dann, wenn das Nachlauffahrzeug auf einem Parkplatz abgestellt ist, stärker exponiert als ein zugfahrzeugseitiges Steckerbauteil, welches häufig unter einem Nutzaufbau des Fahrzeugs und möglicherweise noch seitlich durch Funktionsbaugruppen verdeckt ist, die im Unterbau des Fahrzeugs am Fahrzeugrahmen angeordnet sind.

Zur Gewährleistung einer ausreichenden Bodenfreiheit des Fahrzeugzuges schwenkt das Steckerbauteil von der Verstauungsstellung in die Verbindungserwartungsstellung bevorzugt vom Untergrund weg, so dass sich beispielsweise der Abstand der Steckerformation vom Untergrund während dieser Schwenkbewegung vergrößert. Das weitere Steckerbauteil kann sich dann in noch größerer Entfernung vom Untergrund befinden.

Damit das Steckerbauteil die Verbindungserwartungsstellung sicher und definiert wiederholbar erreichen kann, ist das Steckerbauteil bevorzugt an einem Aufnahmebauteil relativ zu diesem beweglich geführt aufgenommen. Das Aufnahmebauteil kann dabei Teil des Gehäuses bzw. Teilgehäuses sein, in welchem das Steckerbauteil in der Verstauungsstellung aufgenommen ist. Die Bewegungsführung kann durch eine Schwenkachse oder Schwenkwelle realisiert sein, die am Aufnahmebauteil aufgenommen ist.

Das Aufnahmebauteil kann zur Vermeidung unnötiger Bauraumbeanspruchung und unnötigen Gewichts ein Schalenbauteil sein, welches in der Verstauungsstellung des Steckerbauteils dieses wenigstens abschnittsweise umgreift. Beispielsweise kann das Aufnahmebauteil das Steckerbauteil U-förmig unten und seitlich, also insgesamt von drei Seiten umgreifen, während das Aufnahmebauteil nach oben offen ist, so dass das Steckerbauteil ausgehend von seiner Verstauungsstellung bevorzugt nach oben aus dem Aufnahmebauteil in die Verbindungserwartungsstellung ausschwenken kann. Das Aufnahmebauteil ist bevorzugt gesondert vom Kupplungsbauteilkörper ausgebildet und relativ zum Kupplungsbauteilkörper beweglich an diesem vorgesehen.

Eine sichere, schnelle und wiederholgenaue mechanische Steuerung der Bewegung des Steckerbauteils zwischen Verstauungsstellung und Verbindungserwartungsstellung kann dadurch realisiert sein, dass an dem Aufnahmebauteil ein Führungsbauteil vorgesehen ist, welches sowohl relativ zum Aufnahmebauteil als auch relativ zum Steckerbauteil beweglich ist, wobei es am Aufnahmebauteil längs einer Führungstrajektorie beweglich zwischen einer Startstellung und einer Finalstellung geführt ist und wobei es derart mit dem Steckerbauteil zur gemeinsamen Bewegung gekoppelt ist, dass dann, wenn sich das Führungsbauteil in der Startstellung befindet, sich das Steckerbauteil in der Verstauungsstellung befindet und dann, wenn sich das Führungsbauteil in der Finalstellung befindet, sich das Steckerbauteil in der Verbindungserwartungsstellung befindet.

Bevorzugt ist das Führungsbauteil relativ zum Aufnahmebauteil translatorisch beweglich, besonders bevorzugt nur translatorisch beweglich, sodass das Führungsbauteil als Schlitten in dem Aufnahmebauteil aufgenommen sein kann. Dies führt zu einem besonders geringen Bauraumbedarf.

Das ausschließlich translatorisch am Aufnahmebauteil bewegliche Führungsbauteil kann auch und gerade dann verwendet werden, wenn das Steckerbauteil selbst ausschließlich rotatorisch zwischen Verstauungsstellung und Verbindungserwartungsstellung verlagerbar ist.

Beispielsweise kann ein Bauteil aus Steckerbauteil und Führungsbauteil einen Vorsprung aufweisen, welcher mit einer Führungskulisse, etwa einer Führungsnut, am jeweils anderen Bauteil derart zusammenwirkt, dass eine Bewegung des Führungsbauteils von der Startstellung in die Finalstellung zu einer Bewegung des Steckerbauteils von der Verstauungsstellung in die Verbindungserwartungsstellung führt. Die rückstellende Bewegung des Steckerbauteils zurück in die Verstauungsstellung kann in einfachen Fällen schwerkraftgetrieben erfolgen oder durch ein Vorspannmittel, wie eine Feder. Die rückstellende Bewegung kann ungeführt durch das Führungsbauteil sein. Bevorzugt ist jedoch zur Sicherstellung einer definierten bidirektionalen Bewegung des Steckerbauteils zwischen Verstauungsstellung und Verbindungserwartungsstellung auch die Bewegung von der Verbindungserwartungsstellung in die Verstauungsstellung durch das Führungsbauteil geführt.

Dies kann durch Eingriff des oben erwähnten Vorsprungs in eine Führungsnut mit zwei einander gegenüberliegenden Nutflanken erreicht werden, wenn bei der Bewegung des Steckerbauteils in die eine Richtung die eine Nutflanke mit dem Vorsprung zusammenwirkt und bei der Bewegung zurück in die entgegengesetzte Richtung die jeweils gegenüberliegende Nutflanke mit dem Vorsprung zusammenwirkt.

Zur Vermeidung unerwünschter Abstützmomente, die bei der Führung der Bewegung des Steckerbauteils zwischen Verstauungsstellung und Verbindungserwartungsstellung durch das Führungsbauteil auftreten können, ist es bevorzugt, wenn das Führungsbauteil das Steckerbauteil zwischen zwei mit Abstand voneinander vorgesehenen Führungsschenkeln des Führungsbauteils aufnimmt, wobei das Steckerbauteil an jeder einem Führungsschenkel des Führungsbauteils gegenüberliegenden Seite durch das Führungsbauteil zur Relativbewegung gekoppelt und geführt ist. So kann auf jeder einem Führungsschenkel des Führungsbauteils gegenüberliegenden Seite des Steckerbauteils ein Vorsprung an einem der Bauteile aus Steckerbauteil und Führungsbauteil mit einer Führungskulisse, insbesondere Führungsnut, am jeweils anderen Bauteil zur Bewegungskopplung zusammenwirken. Bevorzugt ist das Führungsbauteil zwischen Aufnahmebauteil und Steckerbauteil angeordnet. Aus Stabilitätsgründen besonders bevorzugt ist auch das Führungsbauteil U-förmig ausgebildet und umgreift das Steckerbauteil von drei Seiten.

Grundsätzlich kann daran gedacht sein, die Bewegung des Steckerbauteils von der Verstauungsstellung in die Verbindungserwartungsstellung aus einer Bewegung des weiteren Steckerbauteils am jeweils anderen Fahrzeug abzuleiten. Dies bedeutet, die für die Bewegung des Steckerbauteils benötigte Antriebsenergie wird, sofern vorhanden, von dem Bewegungsantrieb des weiteren Steckerbauteils geliefert und das Steckerbauteil weist einen Hilfskopplungsmechanismus auf, welcher dazu ausgebildet ist, Antriebsenergie vom weiteren Steckerbauteil zum Steckerbauteil hin zu übertragen.

Alternativ ist es jedoch auch möglich, die Bewegung der Kupplungsbauteile relativ zueinander beim Ankuppeln zu nutzen, um daraus die Bewegungsenergie für das Steckerbauteil oder für beide Steckerbauteile abzuleiten. Beispielsweise kann das Steckerbauteil durch das Führungsbauteil von der Verstauungsstellung in die Verbindungserwartungsstellung verbracht werden, wobei das Führungsbauteil zur Einleitung einer vom Führungsbauteil auf das Steckerbauteil übertragenen Bewegung einen Anlageabschnitt aufweisen kann, welcher zur Anlage an ein Gegenanlagebauteil des das weitere Steckerbauteil tragenden Fahrzeugs aus Zugfahrzeug und Nachlauffahrzeug ausgebildet ist. Bevorzugt ist dieses Gegenanlagebauteil das weitere Kupplungsbauteil oder das weitere Ausrichtbauteil. Da insbesondere die Ausrichtbauteile beider Fahrzeuge: Zugfahrzeug und Nachlauffahrzeug, relativ zueinander ausgerichtet werden und diese hierzu in Anlage aneinander kommen, ist der Anlageabschnitt besonders bevorzugt zur Anlage an das weitere Ausrichtbauteil des jeweils anderen Fahrzeugs ausgebildet.

Bei Annäherung der Ausrichtbauteile beider Fahrzeuge kann so der Anlageabschnitt in Anlage an ein Bauteil des jeweils anderen Fahrzeugs gelangen. Bei fortgesetzter Annäherung der beiden Kupplungsbauteile aneinander kann dann das Führungsbauteil relativ zum Aufnahmebauteil und damit auch relativ zum Steckerbauteil bewegt werden und mit seiner Relativbewegung aufgrund der zuvor beschriebenen Bewegungskopplung eine Bewegung des Steckerbauteils zwischen seinen beiden genannten Stellungen bewirken. Hierzu ist der Bewegungswiderstand der Relativbewegung des Führungsbauteils relativ zum Aufnahmebauteil von der Startstellung in die Finalstellung bevorzugt geringer als ein Bewegungswiderstand einer etwaigen Relativbewegung des Aufnahmebauteils in gleicher Richtung relativ zum Kupplungsbauteil, falls eine derartige Relativbewegung des Aufnahmebauteils vorgesehen ist. Wie bereits zuvor geschildert, kann zum Schutz wenigstens einer Steckerformation des Steckerbauteils vorgesehen sein, dass sich die Steckerformation dann, wenn sich das Steckerbauteil in seiner Verstauungsstellung befindet, in einer Aufsteckrichtung hinter einem Verdeckungsbauteil befindet. Die Aufsteckrichtung ist dabei jene Richtung, in welcher bauartbedingt eine Steckerverbindung mit dem Steckerbauteil theoretisch herstellbar ist, unabhängig davon, ob diese Steckerverbindung in der jeweiligen Stellung des Steckerbauteils tatsächlich herstellbar ist.

Um die Anzahl benötigter Bauteile zur Bildung der vorliegend diskutierten Kupplungsvorrichtung gering zu halten, kann vorgesehen sein, dass das Verdeckungsbauteil, bevorzugt auf seiner in der Verstauungsstellung des Steckerbauteils von diesem weg weisenden Seite, die Ausrichtformation des das Steckerbauteil tragenden Ausrichtbauteils aufweist. Grundsätzlich kann zur erleichterten Ausrichtung des Ausrichtbauteils und des weiteren Ausrichtbauteils miteinander vorgesehen sein, dass die Ausrichtformation des Ausrichtbauteils einen sich zu seinem freien Längsende hin verjüngenden Ausrichtvorsprung und die Ausrichtformation des weiteren Ausrichtbauteils eine zum Ausrichtvorsprung wenigstens abschnittsweise komplementäre sich zu ihrem freien Längsende aufweitende Ausrichtausnehmung als ein Ausrichtmaul aufweist, wobei der Ausrichtvorsprung zur Einführung in die Ausrichtausnehmung ausgebildet ist. Dabei können aufgrund der Relativbeweglichkeit des Steckerbauteils relativ zu dem es tragenden Ausrichtbauteil der Öffnungswinkel des Ausrichtmauls und der Verjüngungswinkel des Ausrichtvorsprungs verhältnismäßig groß gewählt sein, beispielsweise größer als 60° oder sogar größer als 90°.

Wenn das Verdeckungsbauteil die Ausrichtformation aufweist, ist es bevorzugt starr, insbesondere einstückig materialschlüssig, mit dem Aufnahmebauteil verbunden. Das Aufnahmebauteil und das Verdeckungsbauteil bilden dann das Ausrichtbauteil.

Konstruktiv kann der Ausrichtvorsprung eine konische oder/und kegelstumpfförmige oder/und tetraedrische oder/und pyramidonale oder/und allgemein polyedrische sich verjüngende Gestalt aufweisen und die Ausrichtausnehmung eine entsprechende negativ-konische oder/und negativ-kegelstumpfförmige oder/und negativ-tetraedrische oder/und negativ-pyramidonale oder/und allgemein negativ-polyedrische sich verjüngende Gestalt aufweisen. Im Falle allgemein polyedrischer sich verjüngender Gestalten des Ausrichtvorsprungs kann dieser auch mehrere Verjüngungswinkel in unterschiedlichen Ebenen aufweisen, wobei dann vorzugsweise kein Verjüngungswinkel kleiner als 45°, bevorzugt kleiner als 60° ist, um einen möglichst kurzen und dennoch bereits mit kurzem Bewegungsweg wirksamen Ausrichtvorsprung zu erhalten.

Vorzugsweise ist die Steckerverbindung ausschließlich durch eine Annäherungsbewegung der Steckerbauteile aufeinander zu herstellbar, ohne dass das Steckerbauteil und das weitere Steckerbauteil bei hergestellter Steckerverbindung unmittelbar miteinander verrastet oder in ähnlicher Weise positionsgesichert sind.

Am gattungsgemäßen Kupplungsbauteil ist das Ausrichtbauteil und mit diesem das Steckerbauteil um die verlängert gedachte gierachsenparallele Längsmittelachse eines Kupplungsbolzens schwenkbar, die bei hergestellter Kupplungsverbindung als Abbiegeachse des Fahrzeugzuges wirkt und um die auch die bekannte nachlauffahrzeugseitige Deichsel bei hergestellter Kupplungsverbindung beim Abbiegen des Fahrzeugzuges relativ zum zugfahrzeugseitigen Kupplungsbauteil schwenkt. Dies führt zu einem Kupplungsbauteil mit unerwünscht großer Abmessung in Gierachsenrichtung.

Eine verglichen mit dem Stand der Technik erhöhte konstruktive Freiheit der Anordnung des Steckerbauteils relativ zum Kupplungsbauteilkörper, wie etwa einer Deichsel, kann dadurch ermöglicht werden, dass das Steckerbauteil oder/und das Ausrichtbauteil relativ zum Kupplungsbauteilkörper jeweils um zwei mit Abstand voneinander angeordnete, zueinander parallele und in Höhenrichtung des Kupplungsbauteilkörpers verlaufende Steckerdrehachsen rotatorisch beweglich und längs einer zu den Steckerdrehachsen orthogonalen Trajektorie translatorisch beweglich angeordnet ist. Aufgrund der beschriebenen Relativkinematik von Steckerbauteil oder/und Ausrichtbauteil relativ zum Kupplungsbauteilkörper kann das Steckerbauteil oder/und das Ausrichtbauteil unabhängig von der Lage einer gierachsenparallellen Abbiegeachse des Fahrzeugzuges am Kupplungsbauteilkörper angeordnet werden. Weder das Steckerbauteil alleine noch die zu einer Steckerverbindung verbundenen Steckerbauteile von Zug- und Nachlauffahrzeug müssen in Verlängerung der Abbiegeachse des Fahrzeugzuges liegen und können versetzt zu dieser angeordnet sein. Entsprechendes gilt für das Ausrichtbauteil und dessen Ausrichtformation. Damit kann das Steckerbauteil oder/und das Ausrichtbauteil in Gierachsenrichtung näher am Kupplungsbauteilkörper vorgesehen sein.

Nachfolgend wird die Relativkinematik von Steckerbauteil oder/und Ausrichtbauteil relativ zum Kupplungsbauteilkörper anhand des Steckerbauteils beschrieben. Alternativ oder zusätzlich gilt für das Ausrichtbauteil das zum Steckerbauteil Gesagte entsprechend, gilt für die Ausrichtformation im Verhältnis zum übrigen Ausrichtbauteil das zur Steckerformation im Verhältnis zum übrigen Steckerbauteil Gesagte entsprechend und gilt für den Formschlusseingriff der Ausrichtbauteile das zur Steckerverbindung Gesagte entsprechend.

Im Bezugszustand mit zusätzlich parallel zum Aufstandsuntergrund orientierter Längsachse des Kupplungsbauteilkörpers verläuft die Höhenrichtung des Kupplungsbauteilkörpers orthogonal zu dessen Längsachse und orthogonal zum Aufstandsuntergrund des Trägerfahrzeugs, also parallel zur Gierachse des Trägerfahrzeugs. Die Längsachse des Kupplungsbauteilkörpers verläuft dann zur Klarstellung parallel zur Längsachse des Trägerfahrzeugs.

Die beschriebene Relativbeweglichkeit des Steckerbauteils relativ zum Kupplungsbauteilkörper ermöglicht in weiten Grenzen eine Relativverdrehung des nachlauffahrzeugseitigen Kupplungsbauteils im Fahrzeugzug um die Längsmittelachse des zugfahrzeugseitigen Kupplungsglieds, wie es beispielsweise beim Abbiegen des Fahrzeugzuges um eine Kurve auftritt, obwohl die in Formschlusseingriff miteinander befindlichen Ausrichtbauteile oder/und die in der Steckerverbindung miteinander verbundenen Steckerbauteile von Zug- und Nachlauffahrzeug relativ zu dem Kupplungsbauteilkörper eines der in Kupplungsverbindung stehenden Kupplungsbauteile um eine andere Achse als die gierachsenparallele Abbiegeachse des Fahrzeugzuges schwenkbar sind. Dieses Abbiegen kann daher mit hergestellter Steckerverbindung erfolgen, ohne dass eine Beschädigung eines der beiden Steckerbauteile zu befürchten ist.

Ist das Steckerbauteil gemäß der bevorzugten Ausführungsform das nachlauffahrzeugseitige Steckerbauteil, verschafft die beschriebene Relativbeweglichkeit des Steckerbauteils relativ zu seinem Kupplungsbauteil dem Konstrukteur der Kupplungsvorrichtung auch die Freiheit, das zugfahrzeugseitige Steckerbauteil und mit diesem gegebenenfalls auch das zugfahrzeugseitige Ausrichtbauteil mit seiner Ausrichtformation unabhängig von der Lage der Längsmittelachse des zugfahrzeugseitigen Kupplungsglieds anzuordnen. Dadurch kann die Abmessung der Kupplungsvorrichtung insgesamt in Gierachsenrichtung verglichen mit dem Stand der Technik verringert werden.

Überdies bietet die bezeichnete vorteilhafte Relativbeweglichkeit des Steckerbauteils relativ zu seinem Kupplungsbauteilkörper die Möglichkeit, das Steckerbauteil auf seinem Kupplungsbauteilkörper reitend, also in Höhenrichtung oberhalb desselben, und nicht etwa wie im zuvor bezeichneten Stand der Technik hängend, also unterhalb desselben, anzubringen, was die Bodenfreiheit der mit der erfindungsgemäßen Kupplungsvorrichtung ausgerüsteten Fahrzeuge erheblich erhöht.

Die vorteilhafte Relativbeweglichkeit des Steckerbauteils relativ zu seinem Kupplungsbauteilkörper kann beispielsweise gemäß einer Ausführungsform dadurch realisiert sein, dass der Abstand der beiden parallelen Steckerdrehachsen aufgrund der translatorischen Beweglichkeit des nachlauffahrzeugseitigen Steckerbauteils veränderlich ist. Ebenso können die beiden Steckerdrehachsen bei unveränderlichem Abstand gemeinsam translatorisch relativ zum Kupplungsbauteil an diesem translatorisch beweglich angeordnet sein. Weiterhin ist eine Mischform dieser beiden Lösungen denkbar, gemäß welcher zwar beide Steckerdrehachsen gemeinsam translatorisch relativ zum Kupplungsbauteil beweglich an diesem angeordnet sind, jedoch auch ihr Abstand voneinander veränderlich ist. Somit kann das Steckerbauteil bei hergestellter Steckerverbindung um zwei gierachsenparallele Steckerdrehachsen relativ zu dem Kupplungsbauteilkörper drehbar sein.

Da bei hergestellter Kupplungsverbindung die gierachsenparallele Längsmittelachse des zugfahrzeugseitigen Kupplungsglieds und eine das nachlauffahrzeugseitige Kupplungsglied parallel zu dessen Höhenachse, also im Bezugszustand gierachsenparallel, zentral durchsetzende Mittelachse idealerweise kollinear sind und eine Abbiegeachse des Fahrzeugzuges bilden, ist es aus den oben genannten Gründen bevorzugt, wenn beide Steckerdrehachsen bei mit Abstand von dem Kupplungsglied des sie tragenden Kupplungsbauteils vorgesehen sind, und zwar bevorzugt mit Abstand in Kupplungsbauteilkörper-Längsrichtung, besonders bevorzugt in einer Annäherungsrichtung, in welcher das zugfahrzeugseitige Kupplungsbauteil in der theoretisch-idealen Ausgangsorientierung an das nachlauffahrzeugseitige Kupplungsbauteil zur Herstellung einer Kupplungsverbindung annäherbar ist. Höchst bevorzugt ist wenigstens eine Steckerdrehachse, vorzugsweise sind beide Steckerdrehachsen in einem von äußeren Kräften freien Zustand, aus den zuvor bereits genannten Gründen mit Abstand nur in Kupplungsbauteilkörper-Längsrichtung, also bevorzugt nur in der genannten Annäherungsrichtung, von dem Kupplungsglied entfernt vorgesehen.

Aus Gründen einer möglichst stabilen Anordnung des nachlauffahrzeugseitigen Steckerbauteils an dem nachlauffahrzeugseitigen Kupplungsbauteil ist die zuvor genannte erste Alternative der Relativbeweglichkeit, also ein veränderlicher Abstand der beiden Steckerdrehachsen aufgrund der translatorischen Beweglichkeit des nachlauffahrzeugseitigen Steckerbauteils bevorzugt.

In dem Fall abstandsveränderlicher Steckerdrehachsen ist es bevorzugt, dass das nachlauffahrzeugseitige Steckerbauteil relativ zu einem Supportbauteil um eine erste Steckerdrehachse drehbar angeordnet ist und dass das Supportbauteil um eine zur ersten parallele zweite Steckerdrehachse relativ zum nachlauffahrzeugseitigen Kupplungsbauteilkörper drehbar angeordnet ist. Das Supportbauteil kann dann mit nur einem Bewegungsfreiheitsgrad, also mit einem rotatorischen Bewegungsfreiheitsgrad um die zweite Steckerdrehachse stabil am nachlauffahrzeugseitigen Kupplungsbauteilkörper, insbesondere an einer Deichsel, drehbar angeordnet sein.

Weiterhin ist dann das nachlauffahrzeugseitige Steckerbauteil bevorzugt relativ zum Supportbauteil längs der zu den Steckerdrehachsen orthogonalen Trajektorie translatorisch verlagerbar. Besonders bevorzugt ist das Steckerbauteil gemeinsam mit der Ausrichtformation oder/und dem Aufnahmebauteil längs der Trajektorie relativ zum Supportbauteil verlagerbar. Dabei kann das Steckerbauteil relativ zum Supportbauteil gegen die Rückstellkraft einer Rückstelleinrichtung sowohl längs der Trajektorie verlagerbar als auch um die erste Steckerdrehachse drehbar sein. Dabei können gesonderte Rückstelleinrichtungen vorgesehen sein, eine zur Rückstellung um die erste Steckerdrehachse und eine zur Rückstellung längs der Trajektorie. Die Rückstelleinrichtung zur Rückstellung längs der Trajektorie ist bevorzugt an dem Supportbauteil aufgenommen.

Die längs der Trajektorie wirkende Rückstelleinrichtung kann derart aufgebaut sein, dass sie zwei koaxiale, sich wenigstens abschnittsweise überlappende Federn umfasst, welche eine Ruhelage des Steckerbauteils bezüglich der Trajektorie definieren und von welchen jede das Steckerbauteil in eine andere von zwei entgegengesetzten Richtungen längs der Trajektorie rückstellt. Ebenso kann daher vorgesehen sein, dass das nachlauffahrzeugseitige Steckerbauteil längs einer Mehrzahl, vorzugsweise zweier, paralleler und mit Abstand voneinander angeordneter Führungsvorrichtungen, insbesondere Führungsstangen, zur Bewegung längs der Trajektorie geführt ist, wobei bevorzugt an jeder Führungsvorrichtung je eine Rückstelleinrichtung vorgesehen ist.
- Figur 1: eine perspektivische Ansicht einer erfindungsgemäßen Kupplungsvorrichtung bei nicht hergestellter Kupplungsverbindung,
- Figur 2: die Kupplungsvorrichtung von Figur 1 bei Ansicht in Nickachsenrichtung der beteiligten Fahrzeuge,
- Figur 3: die Kupplungsvorrichtung von Figur 2 in derselben Ansicht bei hergestellter Kupplungsverbindung,
- Figur 4: eine Draufsicht der Kupplungsverbindung von Figur 3 bei maximal möglicher Abwinklung von zug- und nachlauffahrzeugseitigem Kupplungsbauteil relativ zueinander,
- Figur 5: eine in teilweiser Schnitt- und teilweiser Explosionsdarstellung gezeigte Rückansicht eines zugfahrzeugseitigen Ausrichtbauteils mit von diesem getragenen zugfahrzeugseitigen Steckerbauteil der Kupplungsvorrichtung der Figuren 1 bis 4,
- Figur 6: eine perspektivische Darstellung, teilweise im Schnitt, das nachlauffahrzeugseitigen Ausrichtbauteils mit von diesem getragenen nachlauffahrzeugseitigen Steckerbauteil,
- Figur 7: eine Schnittdarstellung von zugfahrzeugseitigem Ausricht- und Steckerbauteil sowie von nachlauffahrzeugseitigem Ausricht- und Steckerbauteil gemäß der Figuren 5 bzw. 6 vor Herstellung eines Formschlusseingriffs zwischen den Ausrichtbauteilen,
- Figur 8: die Bauteile von Figur 7 bei Annäherung von zug- und nachlauffahrzeugseitigem Ausrichtbauteil aneinander,
- Figur 9: die Bauteile der Figuren 7 und 8 mit in Formschlusseingriff aneinander festgelegten zug- und nachlauffahrzeugseitigen Ausrichtbauteilen sowie mit zug- und nachlauffahrzeugseitigen Steckerbauteilen in hergestellter Steckerverbindung,
- Figur 10: eine zweite Ausführungsform des nachlauffahrzeugseitigen Kupplungsbauteils in perspektivischer Explosionsansicht und
- Figur 11: eine Längsschnittansicht durch die zweite Ausführungsform des nachlauffahrzeugseitigen Kupplungsbauteils in fertig montiertem Zustand.

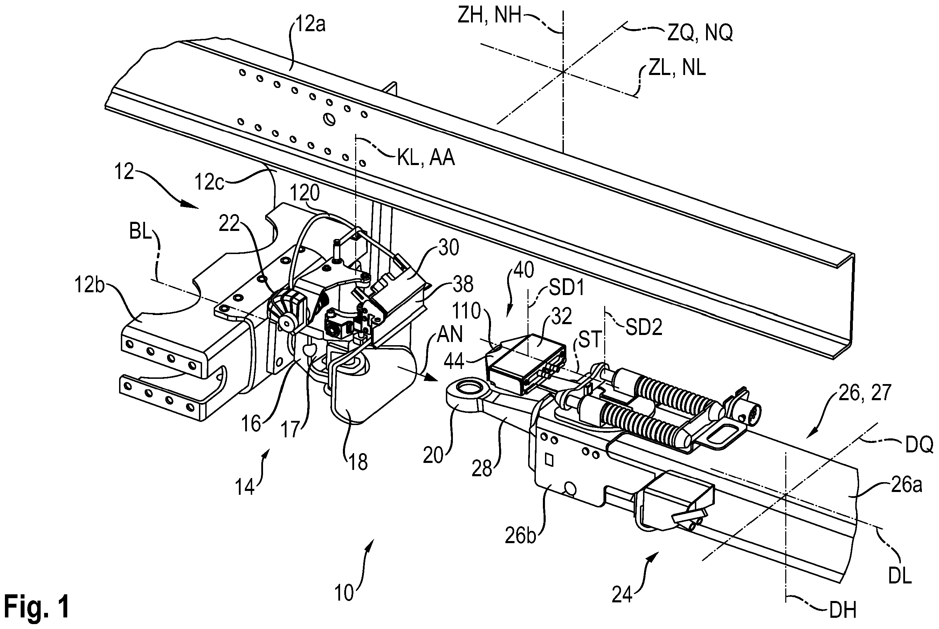

In den Figuren 1 bis 4 ist eine allgemein mit 10 bezeichnete erfindungsgemäße Kupplungsvorrichtung in unterschiedlichen Perspektiven und mit unterschiedlichen Relativstellungen der beteiligten Kupplungsbauteile relativ zueinander dargestellt.

In Figur 1 ist ein Fahrzeugrahmen 12 eines Zugfahrzeugs dargestellt. Dieser umfasst einen längs einer Zugfahrzeug-Längsachse ZL verlaufenden Längsträger 12a und einen orthogonal hierzu in Zugfahrzeug-Querrichtung ZQ verlaufender Zugfahrzeug-Querträger 12b.

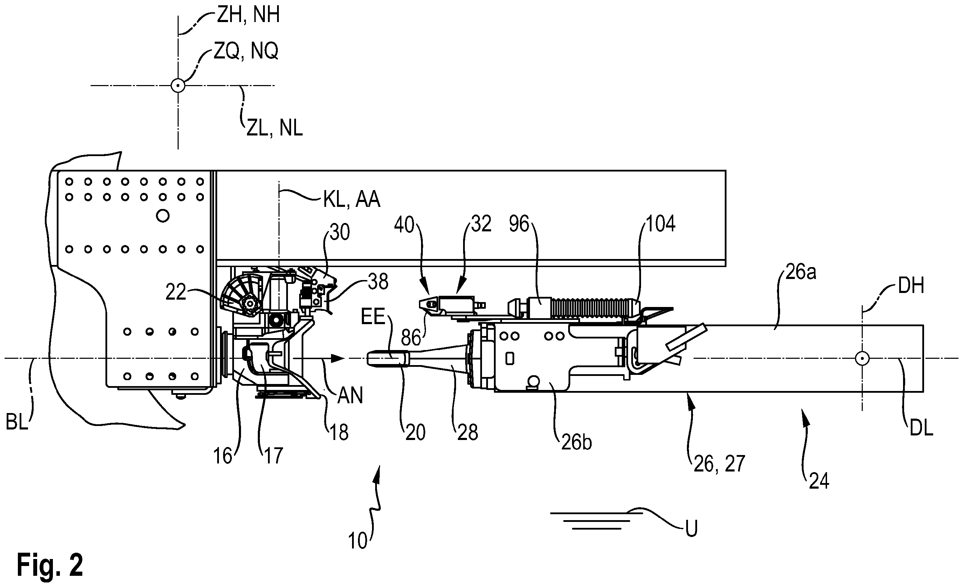

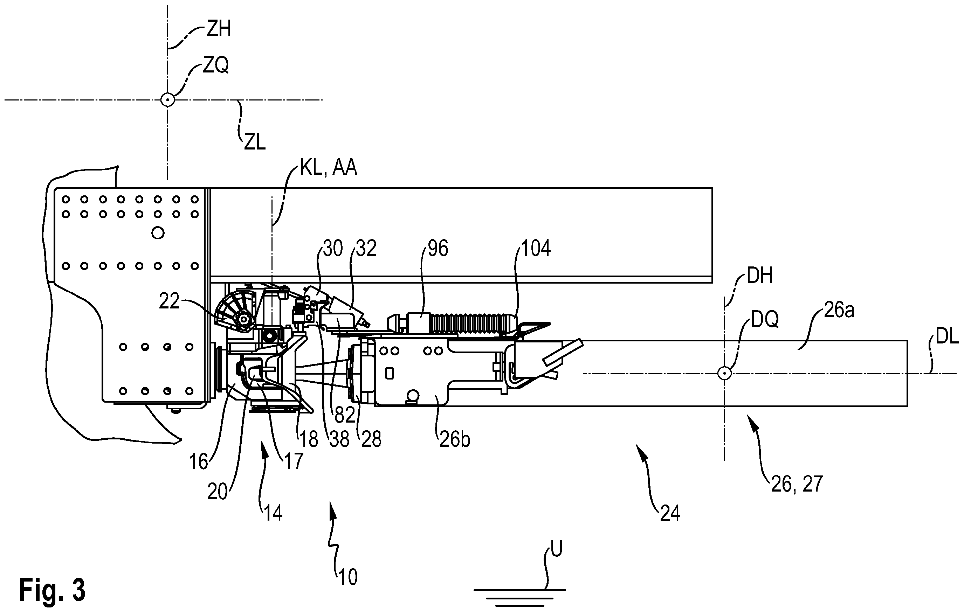

Die Zugfahrzeug-Längsachse ZL und die Zugfahrzeug-Querachse ZQ verlaufen parallel zu einem Aufstandsuntergrund des Zugfahrzeugs. Eine zu beiden genannten Achsen orthogonale Zugfahrzeug-Höhenachse ZH verläuft daher orthogonal zu dem lediglich in den Figuren 2 und 3 schematisch dargestellten Aufstandsuntergrund U. Die Zugfahrzeug-Längsachse ZL ist parallel zur Rollachse des Zugfahrzeugs, die Zugfahrzeug-Querachse ZQ ist parallel zur Nickachse des Zugfahrzeugs und die Zugfahrzeug-Höhenachse ZH ist parallel zur Gierachse des Zugfahrzeugs. In der vorliegenden Anmeldung ist dabei stets der Begriff "Gierachse" synonym gebraucht für eine Fahrzeughöhenachse, der Begriff "Nickachse" synonym für eine Fahrzeugquerachse und der Begriff "Rollachse" für eine Fahrzeuglängsachse.

Der Querträger 12b kann entweder unmittelbar am Längsträger 12a oder, wie in den Figuren dargestellt, über ein Vertikalschild 12c mit dem Längsträger 12a verbunden sein.

Am Zugfahrzeug-Querträger 12b ist in dessen Quermitte das zugfahrzeugseitige Kupplungsbauteil 14 einer in den Figuren 1 bis 4 dargestellten Bolzenkupplung angebracht.

Das zugfahrzeugseitige Kupplungsbauteil 14 umfasst ein Kupplungsgehäuse 16, an welchem ein in Figur 1 nicht dargestellter Kupplungsbolzen als Kupplungsglied längs der Gierachse ZH des Zugfahrzeugs in an sich bekannter Weise beweglich aufgenommen ist. Die gierachsenparallele Längsmittellinie KL des Kupplungsbolzens ist in den Figuren 1 bis 4 dargestellt.

Am Kupplungsgehäuse 16, dessen Zugösen-Aufnahmeraum 17 der Kupplungsbolzen je nach seiner Betriebsstellung unterschiedlich stark durchsetzt, ist ein um die Längsmittelachse KL des Kupplungsbolzens schwenkbares Fangmaul 18 angeordnet, welches in die in den Figuren 1 bis 3 dargestellte Stellung vorgespannt ist. Das Fangmaul 18 erleichtert in an sich bekannter Weise das Einfädeln einer nachlauffahrzeugseitigen Zugöse 20, welche ein nachlauffahrzeugseitiges Kupplungsglied darstellt, in den Zugösen-Aufnahmeraum 17 zur Ineingriffnahme durch den Kupplungsbolzen.

Das zugfahrzeugseitige Kupplungsbauteil 14 weist im dargestellten Beispiel ein Kinetrol 22 auf, welches u. a. als Antriebskraftquelle für eine Bewegung des Kupplungsbolzens wenigstens in die aus dem Zugösen-Aufnahmeraum 17 des Kupplungsgehäuses 16 zurückgezogene Stellung dient. In dieser Stellung ist der Zugösen-Aufnahmeraum 17 des Kupplungsgehäuses 16 für das Einführen oder/und das Herausziehen der Zugöse 20 in den bzw. aus dem Zugösen-Aufnahmeraum 17 frei.

Das Zugfahrzeug, repräsentiert durch seinen Fahrzeugrahmen 12, ist in der in den Figuren 1 und 2 gezeigten Bezugsstellung, in welcher das Zugfahrzeug und das Nachlauffahrzeug, repräsentiert durch das nachlauffahrzeugseitige Kupplungsbauteil 24, sich auf einem gemeinsamen ebenen Untergrund unmittelbar hintereinander mit komplanaren, zum gemeinsamen Untergrund U orthogonalen Fahrzeuglängsmittelebenen angeordnet sind, längs der Zugfahrzeug-Längsachse ZL in einer zum Nachlauffahrzeug hinweisenden Annäherungsrichtung AN an die Zugöse 20 des Nachlauffahrzeugs annäherbar, um die Zugöse 20 zur Herstellung eines Kupplungsverbindungseingriffs mit dem Kupplungsbolzen und damit zur Herstellung einer Kupplungsverbindung zwischen Zug- und Nachlauffahrzeug in den Zugösen-Aufnahmeraum 17 des Kupplungsgehäuses 16 einzuführen.

Das nachlauffahrzeugseitige Kupplungsbauteil 24 weist eine Deichsel 26 mit einem Deichselkörper 27 auf. Der Deichselkörper 27 weist ein einem nicht dargestellten Nachlauffahrzeugkörper näher gelegenen erstes Deichselkörper-Bauteil 26a und ein der Zugöse 20 näher gelegenes zweites Deichselkörper-Bauteil 26b auf. An dem der Zugöse 20 näher gelegenen Längsende des zweiten Deichselkörper-Bauteils 26b ist ein Zugösen-Bauteil 28 fest mit dem Deichselkörper 27 verbunden.

In den Figuren 1 bis 3 verläuft der Deichselkörper 27 und mit ihm das gesamte Nachlauffahrzeug mit einer zur Zugfahrzeug-Längsachse ZL parallelen Nachlauffahrzeug-Längsachse NL. Ebenso ist die Nachlauffahrzeug-Querachse NQ parallel zur Zugfahrzeug-Querachse ZQ. Schließlich ist auch die Nachlauffahrzeug-Höhenachse NH parallel zur Zugfahrzeug-Höhenachse ZH. Dies zeichnet weiter den oben genannten Bezugszustand aus, in dem sich Zugfahrzeug und Nachlauffahrzeug in den Figuren 1 bis 3 befinden. Eine den Deichselkörper 27 zentral durchsetzende Deichselkörper-Längsachse DL ist in dem Bezugszustand kollinear mit einer zur Zugfahrzeug-Längsachse ZL parallelen Längsachse BL durch den Zugösen-Aufnahmeraum 17 im Kupplungsgehäuse 16 des zugfahrzeugseitigen Kupplungsbauteils 14. Dann, wenn der Kupplungsbolzen bei hergestellter Kupplungsverbindung die Zugöse 20 und den Zugösen-Aufnahmeraum 17 des Kupplungsgehäuses 16 durchsetzt, durchsetzt die genannte Längsachse BL auch den Kupplungsbolzen. Ebenso durchsetzt die Deichselkörper-Längsachse DL die Zugöse 20 diametral in ihrer Äquatorebene EE, die im dargestellten Bezugszustand parallel zum Untergrund U orientiert ist. Die Äquatorebene EE der Zugöse 20 ist in Figur 2 orthogonal zur Zeichenebene der Figur 2 orientiert.

Der Vollständigkeit halber sei erwähnt, dass eine Deichselkörper-Höhenachse DH die Deichsel 26 bzw. den Deichselkörper 27 bei untergrundparalleler Ausrichtung der Deichselkörper-Längsachse DL parallel zu den Höhenachsen ZH und NH von Zugfahrzeug und Nachlauffahrzeug durchsetzt. Ebenso ist dann die Deichselkörper-Querachse DQ zur Deichselkörper-Höhenachse DH und zur Deichsellängsachse DL orthogonal.

Dann, wenn bei hergestellter Kupplungsverbindung, wie sie in Figur 3 gezeigt ist, und somit bei hergestelltem Fahrzeugzug, eine relative Nickbewegung zwischen Zug- und Nachlauffahrzeug eintritt, etwa weil ein entsprechend gekrümmter Untergrund überfahren wird, wird die Deichselkörper-Längsachse DL um den Nickwinkel relativ zur Zugfahrzeug-Längsachse ZL verdreht sein. Gleiches gilt für die zur Deichselkörper-Längsachse DL orthogonale Deichselkörperhöhenachse DH.

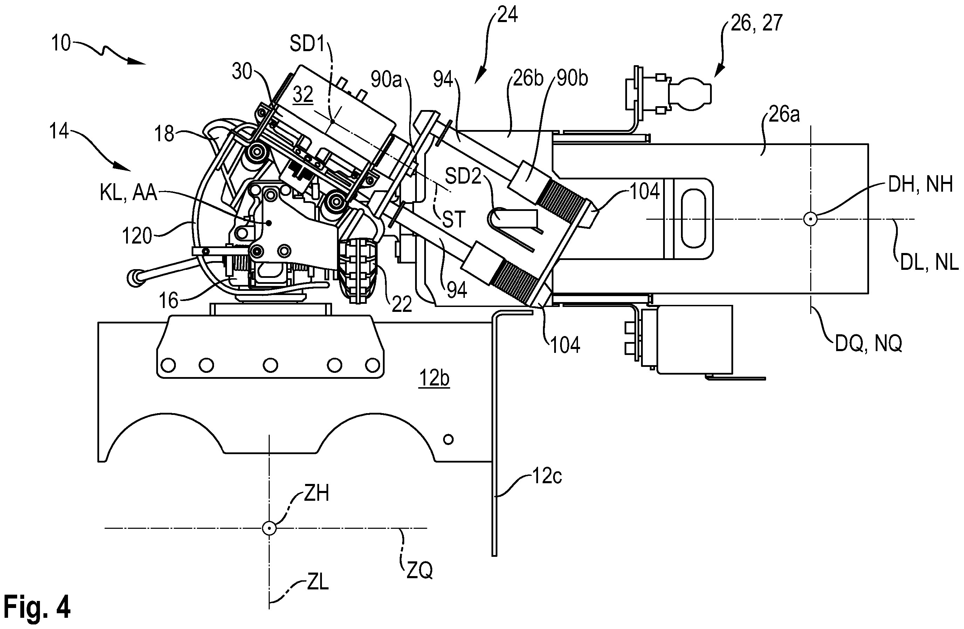

Beim Abbiegen des gebildeten Fahrzeugzuges, wie es in einem Extremfall in Figur 4 gezeigt ist, wird die Deichselkörper-Längsachse DL um eine von der Kupplungslängsachse KL gebildete Abbiegeachse AA des Fahrzeugzuges relativ zur Zugfahrzeug-Längsachse ZL abgewinkelt. Entsprechendes gilt für die zur Deichselkörper-Längsachse DL orthogonale Deichselkörper-Querachse DQ. Die zu den jeweiligen Abwinkel- bzw. Abbiegeachsen parallelen Körperachsen - das sind die Querachsen ZQ und DQ beim Nicken und das sind die Höhenachsen ZH und DH beim Abbiegen - bleiben jeweils zueinander parallel. Die Deichsel 26 sei vorliegend relativ zum übrigen Nachlauffahrzeug unbeweglich angenommen, wenngleich dies nicht so sein muss. Die Deichselkörper-Längsachse DL ist daher parallel zur Nachlauffahrzeug-Längsachse NL, die Deichselkörper-Querachse DQ ist parallel zur Nachlauffahrzeug-Querachse NQ und die Deichselkörperhöhenachse DH ist parallel zur Nachlauffahrzeug-Höhenachse NH.

Die Kupplungsbauteile 14 und 24 sind nicht nur zur Herstellung der Kupplungsverbindung ausgebildet, die die für die Bildung eines Fahrzeugzuges notwendige Übertragbarkeit von Zugkraft vom Zugfahrzeug auf das Nachlauffahrzeug sorgt, sondern sind überdies in äußerst vorteilhafter Weise für eine automatisierte Herstellung einer Energie oder/und Information übertragenden Steckerverbindung zwischen einem zugfahrzeugseitigen Steckerbauteil 30 und einem nachlauffahrzeugseitigen Steckerbauteil 32 ausgebildet. Der Übersichtlichkeit halber sind in den Figuren entsprechende Energie- oder/und übertragende Versorgungsleitungen nicht dargestellt, für die am jeweiligen Fahrzeug aus Zugfahrzeug und Nachlauffahrzeug die Steckerbauteile 30 und 32 eine Schnittstelle bilden.

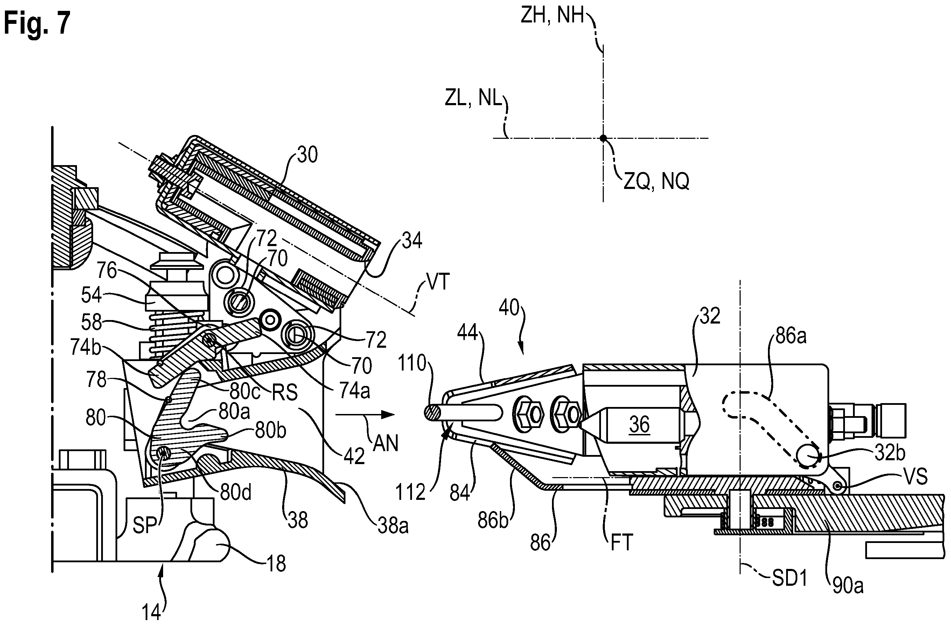

Die eigentliche Übertragung von Energie oder/und Information über die bei hergestellter Steckerverbindung verbundenen Steckerbauteile 30 und 32 erfolgt über die zugfahrzeugseitige Steckerformation 34 und die nachlauffahrzeugseitige Steckerformation 36, welche beide schematisiert in den Figuren 7 bis 9 dargestellt sind. Die Steckerformationen 34 und 36 von Zugfahrzeug und Nachlauffahrzeug kontaktieren sich bei hergestellter Steckerverbindung und bilden somit eine Möglichkeit, Energie in elektrischer oder/und pneumatischer oder/und hydraulischer Form oder/und Information zwischen Zug- und Nachlauffahrzeug zu übertragen.

Eine Steckerformation, im dargestellten Beispiel etwa die zugfahrzeugseitige Steckerformation 34, kann als Buchse ausgebildet sein. Die jeweils andere Steckerformation, hier die nachlauffahrzeugseitige Steckerformation 36, kann als männlicher Stecker ausgebildet sein.

Zur Erleichterung der Herstellung der Steckerverbindung weist das zugfahrzeugseitige Kupplungsbauteil 14 ein zugfahrzeugseitiges Ausrichtbauteil 38 auf und weist das nachlauffahrzeugseitige Kupplungsbauteil 24 ein nachlauffahrzeugseitiges Ausrichtbauteil 40 auf. Die Ausrichtbauteile 38 und 40 sind zur Herstellung eines Formschlusseingriffs miteinander ausgebildet, um die Steckerbauteile 32 und 34 in eine für die Herstellung einer Steckerverbindung vorteilhafte Ausgangssituation zu verbringen, also diese steckerverbindungsvorbereitend auszurichten.

Eines der Ausrichtbauteile, im vorliegenden Beispiel das zugfahrzeugseitige Ausrichtbauteil 38, weist vorteilhafterweise eine Ausrichtausnehmung 42 als Ausrichtformation auf. Das jeweils andere Ausrichtbauteil - hier das nachlauffahrzeugseitige Ausrichtbauteil 40 - weist einen sich zum jeweils anderen Fahrzeug des Fahrzeugzuges hin verjüngenden Vorsprung 44 als Ausrichtformation auf.

Damit die steckerverbindungsvorbereitende Ausrichtung bei kurzem Ausrichtbewegungsweg funktioniert, trägt wenigstens ein Ausrichtbauteil das Steckerbauteil desselben Fahrzeugs derart, dass das Steckerbauteil relativ zu dem es tragenden Ausrichtbauteil beweglich ist. Im vorliegenden Beispiel ist sowohl das zugfahrzeugseitige Steckerbauteil 30 relativ zum zugfahrzeugseitigen Ausrichtbauteil 38 beweglich, wie auch das nachlauffahrzeugseitige Steckerbauteil 32 zum nachlauffahrzeugseitigen Ausrichtbauteil 40 beweglich ist.

Das zugfahrzeugseitige Ausrichtbauteil 38 ist wiederum bevorzugt am Fangmaul 18 des zugfahrzeugseitigen Kupplungsbauteils 14 angeordnet, um dessen Relativbeweglichkeit relativ zum Kupplungsbolzen und zum Kupplungskörper 16 auch für das am zugfahrzeugseitigen Ausrichtbauteil 38 vorgesehene Steckerbauteil 32 nutzen zu können.

In den Figuren 2 und 3 ist zu erkennen, dass das zugfahrzeugseitige Ausrichtbauteil 38 mit seinem Steckerbauteil 30 längs der Zugfahrzeug-Längsachse ZL und zwar bevorzugt in der Annäherungsrichtung AN des Zugfahrzeugs an das Nachlauffahrzeug bei Herstellung der Kupplungsverbindung versetzt angeordnet ist. Damit kann eine längs der Zugfahrzeug-Höhenachse sehr kompakte Anordnung erhalten werden, bei der dennoch das zugfahrzeugseitige Ausrichtbauteil 38 und das zugehörige Steckerbauteil 30 oberhalb der das zugfahrzeugseitige Kupplungsbauteil 14 durchsetzenden Längsachse BL angeordnet werden kann.

Im Stand der Technik sind bei funktionell vergleichbaren Lösungen das zugfahrzeugseitige Ausrichtbauteil oder/und das zugfahrzeugseitige Steckerbauteil mit der Längsmittellinie KL des Kupplungsbolzens fluchtend angeordnet. Bei der erfindungsgemäßen vorteilhaften orthogonal zur verlängert gedachten Längsmittellinie KL des Kupplungsbolzens versetzten Anordnung von zugfahrzeugseitigem Ausrichtbauteil 38 und Steckerbauteil 30 kann eine Bolzenaufnahme 16a des Kupplungsgehäuses 16, in welchem der Kupplungsbolzen dann aufgenommen ist, wenn er aus dem Zugösen-Aufnahmeraum 17 des Kupplungsgehäuses 16 zurückgezogen ist, längs der Zugfahrzeug-Höhenachse ZL mit dem zugfahrzeugseitigen Ausrichtbauteil 38 oder/und dem zugfahrzeugseitigen Steckerbauteil 30 axial überlappend angeordnet werden.

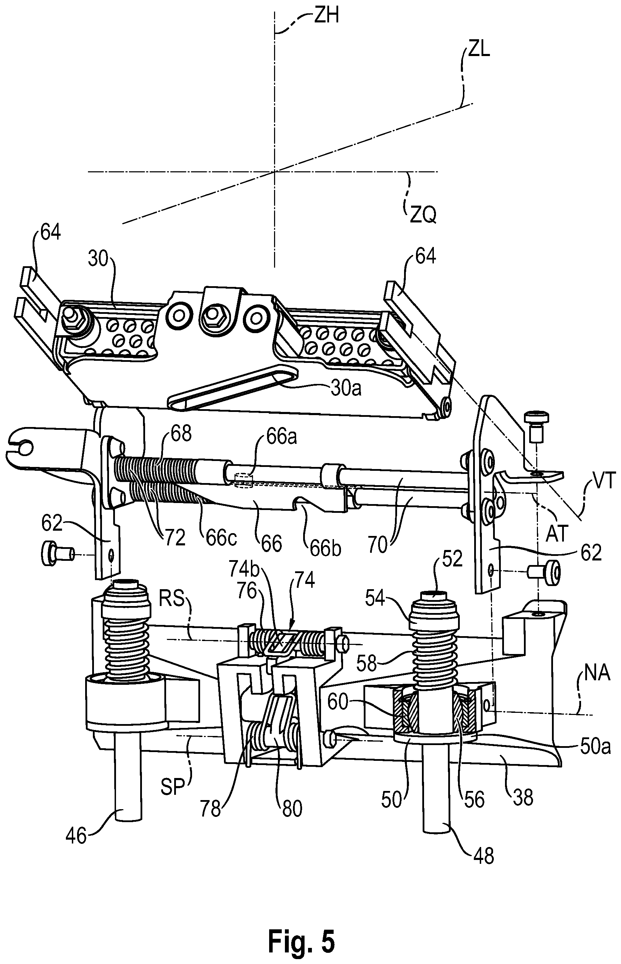

Nachfolgend wird anhand von Figur 5 das zugfahrzeugseitige Ausrichtbauteil 38 mit dem relativ zu diesem beweglich vorgesehenen zugfahrzeugseitigen Steckerbauteil 30 erläutert. Zur Erleichterung der Orientierung sind in Figur 5 die Zugfahrzeug-Höhenachse ZH und die Zugfahrzeug-Querachse ZQ angegeben. Die Zugfahrzeug-Längsachse ZL ist etwas um die Senkrechte zur Zeichenebene der Figur 5 nach links geneigt. Die zugfahrzeugseitige Ausrichtformation 42 weist in Figur 5 vom Betrachter weg.

Das Ausrichtbauteil 38 mit seiner zum Ausrichtvorsprung 44 wenigstens abschnittsweise komplementären Ausrichtausnehmung 42 ist an zwei parallelen und längs der Zugfahrzeug-Höhenachse ZH verlaufenden Führungsstangen 46 und 48 translatorisch beweglich geführt.

Die Führung des zugfahrzeugseitigen Ausrichtbauteils 38 ist an beiden Führungsstangen 46 und 48 im Wesentlichen identisch ausgeführt. Aus Gründen der Übersichtlichkeit wird daher die Führung nur anhand der in Figur 5 rechten Führungsstange 48 erläutert.

An der Führungsstange 48 ist ein Führungstopf 50 längs der Führungsstange 48 längs der Zugfahrzeug-Höhenachse ZH beweglich geführt, wobei der Führungstopf 50 von einer im Inneren des Topfes 50 vorhandenen und damit in Figur 5 nicht sichtbaren inneren Schraubendruckfeder in seine fangmaulferne Endstellung vorgespannt ist.

Fest mit der Führungsstange 48 an deren fangmaulfernem Längsende verbunden ist eine endseitige Abschlussschraube 52, an welcher ein zur gemeinsamen Bewegung mit dem Führungstopf 50 verbundener Dom 54 aufgrund der Vorspannung der radial inneren Schraubendruckfeder anliegt. Der Führungstopf 50 kann sich daher ausgehend von seiner in Figur 5 gezeigten Ruhestellung längs der Führungsstange 48 nur nach unten, also zum Fangmaul 18 hin bewegen. Am Führungstopf 50 radial außen ist eine Gelenkkugel 56 beweglich geführt, welche durch eine zweite, äußere Schraubendruckfeder 58, die koaxial und überlappend mit der inneren Schraubendruckfeder im Inneren des Führungstopfes angeordnet ist, gegen einen nach radial außen vorstehenden umlaufenden Radialvorsprung 50a des Führungstopfes 50 vorgespannt ist. Relativ zum Führungstopf 50 kann sich die Gelenkkugel 56 in der in Fig. 5 gezeigten Stellung gegen die Vorspannkraft der zwischen Gelenkkugel 56 und Dom 54 abgestützten äußeren Schraubendruckfeder 58 vom Radialvorsprung 50a weg nur nach oben zum Dom 54 hin bewegen.

Somit ist das Ausrichtbauteil 38 an den Führungsstangen 46 und 48 in eine in Figur 5 dargestellte Ruhelage vorgespannt, aus der heraus das Ausrichtbauteil 38 in beide entgegengesetzten Richtungen längs der Führungsstangen 46 und 48 (längs der Zugfahrzeug-Höhenachse ZH) auslenkbar ist. Am Ausrichtbauteil 38 ist jede Gelenckugel 56 in einer negativ-kugelkalottenförmigen Gleitschale 60 geführt, sodass das Ausrichtbauteil 38 nicht nur längs der Zugfahrzeug-Höhenachse ZH verlagerbar, sondern auch um eine zur Nickachse ZQ des Zugfahrzeugs parallele Nick-Ausrichtachse NA relativ zu den Führungsstangen 46 und 48 verschwenkbar ist.

Die Anordnung von zwei parallelen Führungsstangen 46 und 48 erfolgt aus Gründen bestmöglicher Bauraumausnutzung, sodass zwischen den Führungsstangen 46 und 48 ein nachfolgend im Zusammenhang mit den Figuren 7 bis 9 näher beschriebener Verriegelungsmechanismus zur Verriegelung der Ausrichtbauteile 38 und 40 aneinander aufgenommen sein kann.

Im vorliegenden Beispiel ist am Ausrichtbauteil 38 mit Schrauben ein Tragbauteil 62 befestigt, welches vom Ausrichtbauteil 38 im dargestellten Beispiel in Richtung der Zugfahrzeug-Gierachse ZH vom Fangmaul 18 weg absteht. Die Verbindung des Tragbauteils 62 mit dem Ausrichtbauteil 38 kann zusätzlich oder alternativ auch mit anderen Verbindungsmitteln als mit Schrauben hergestellt sein.

Am Tragbauteil 62 ist das zugfahrzeugseitige Steckerbauteil 30 längs einer Verbindungstrajektorie VT zwischen zwei unterschiedlichen Stellungen beweglich, nämlich zwischen einer näher bei den verlängert gedachten Längsmittelachsen der Führungsstangen 46 und 48 gelegenen zurückgezogenen Verbindungsbereitschaftsstellung und einer längs der Verbindungstrajektorie VT zum Nachlauffahrzeug hin versetzten Verbindungsaktivierungsstellung. Hierzu können am Steckerbauteil 30 oder/und am Tragbauteil 62 Führungsmittel 64 vorgesehen sein (in Figur 5 sind Führungsmittel 64 nur am zugfahrzeugseitigen Steckerbauteil 30 dargestellt).

Üblicherweise ist das zugfahrzeugseitige Steckerbauteil 30 derart am zugfahrzeugseitigen Kupplungsbauteil 14 angeordnet, dass die das Steckerbauteil 30 in seiner Quermitte durchsetzende Verbindungstrajektorie VT mit einer den Zugösen-Aufnahmeraum 17 bzw. den Kupplungsbolzen in seiner eine Zugöse durchsetzenden Stellung zentral durchsetzende Längsmittellinie BL in einer orthogonal zum Aufstandsuntergrund U des Zugfahrzeugs gelegenen Fahrzeuglängsmittelebene des Zugfahrzeugs gelegen sind und einen Winkel zwischen sich einschließen. Der Schnittpunkt der verlängert gedachten Verbindungstrajektorie VT mit der den Kupplungsbolzen durchsetzenden Längsmittellinie BL ist bevorzugt ausgehend vom Kupplungsbolzen zum Nachlauffahrzeug hin versetzt, was die vorteilhafte Anordnung des zugfahrzeugseitigen Steckerbauteils 30 längs der Zugfahrzeug-Höhenachse ZH über dem Fangmaul 18 ermöglicht.

Als Bewegungsantrieb zur Verlagerung des zugfahrzeugseitigen Steckerbauteils 30 zwischen den genannten Stellungen: Verbindungsbereitschaftsstellung und Verbindungsaktivierungsstellung, sind am bevorzugt mehrteilig ausgeführten Tragbauteil 62 ein Antriebsbauteil 66 und ein Kraftgerät 68 vorgesehen. Hierzu sind genauer zwei parallele Führungsschienen in Form von Führungsstangen 70 das Tragbauteil 62 längs der Zugfahrzeug-Querachse ZQ überspannend angeordnet, an welchem das Antriebsbauteil 66 längs einer zur Zugfahrzeug-Querachse ZQ parallelen Antriebstrajektorie AT beweglich geführt aufgenommen ist. Das Kraftgerät 68 umfasst bevorzugt Schraubendruckfedern 72, bevorzugt an jeder Antriebsführungsstange 70 je eine. Die Schraubendruckfedern 72, die keine äußere Energieversorgung benötigen, sind zwischen einem Querende längs der Zugfahrzeug-Querachse ZQ und dem diesem Ende näher gelegenen Ende des Antriebsbauteils 66 angeordnet.

Das Antriebsbauteil 66 kann mit dem zugfahrzeugseitigen Steckerbauteil 30 über eine mechanische Steuerung gekoppelt sein, sodass beispielsweise am Antriebsbauteil 66 ein von diesem abstehender Vorsprung 66a vorgesehen sein kann, welcher in eine Kulisse 30a am Steckerbauteil 30 eingreift. In Figur 5 ist das Antriebsbauteil 66 in seiner Anfangsstellung als eine seiner möglichen Endstellungen gezeigt, in welcher die Schraubendruckfedern 72 ihr betriebsmäßig größtes Maß an potenzieller Energie aufweisen. Dann, wenn sich das Antriebsbauteil 66 in dieser Anfangsstellung befindet, befindet sich das zugfahrzeugseitige Steckerbauteil 30 aufgrund des formschlüssigen Eingriffs von Nocken 66a und Kulisse 30a in seiner Verbindungsbereitschaftsstellung.

Ein im dargestellten Beispiel zweiarmiger Riegel 74 greift mit seinem in Figur 5 nicht erkennbaren Verriegelungsschenkel 74a (s. Fig. 7 bis 9) in eine Verriegelungsausnehmung 66b am Antriebsbauteil 66 und sichert dieses so gegen eine Verlagerung in die längs der Antriebstrajektorie in Figur 5 nach rechts versetzte Endstellung (nicht dargestellt).

Durch eine Feder 76, welche am Betätigungsschenkel 74b des Riegels 74 angreift, ist der Riegel 74 in seine Verriegelungsstellung vorgespannt, in welcher sein Verriegelungsschenkel 74a in die Verriegelungsausnehmung 66b selbsttätig einrückt, sobald diese sich über dem Verriegelungsschenkel 74a befindet.

Eine weitere Feder 78 auf der von der Ausrichtausnehmung 42 wegweisenden Seite des Ausrichtbauteils 38 spannt einen Sperrhaken 80, auf den weiter unten noch näher eingegangen wird, in seine Einführstellung vor, in der er in Figur 7 zu sehen ist. Der Riegel 74 ist ebenso um eine parallel zur Zugfahrzeug-Querachse ZQ verlaufende Riegelschwenkachse RS schwenkbar, wie der Sperrhaken 80 um eine zur Zugfahrzeug-Querrichtung ZQ parallele Sperrhakenschwenkachse SP schwenkbar ist.

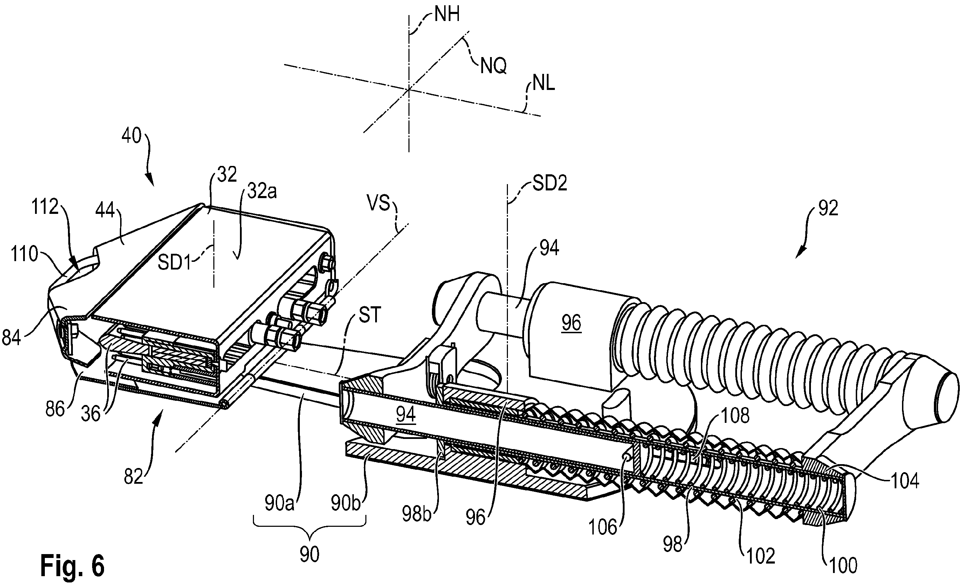

Anhand der Figur 6 unter weiterer Einbeziehung der Figuren 4 und 7 wird nachfolgend der konstruktive Aufbau des im Beispiel nachlauffahrzeugseitigen Ausrichtbauteils 40 mit dem von diesem getragenen nachlauffahrzeugseitigen Steckerbauteil 32 beschrieben werden.

Das nachlauffahrzeugseitige Steckerbauteil 32 ist an einem Aufnahmebauteil 82 um eine Verstauungsschwenkachse VS schwenkbar aufgenommen. Die Verstauungsschwenkachse VS ist in der in Figur 6 gezeigten von äußeren Kräften freien Stellung parallel zur Nachlauffahrzeug-Querachse NQ. Sie bleibt unabhängig von den möglichen Relativbewegungen des Steckerbauteils 32 und des Aufnahmebauteils 82 relativ zur Deichsel 26 parallel zum Untergrund, auf welchem das Nachlauffahrzeug aufsteht.

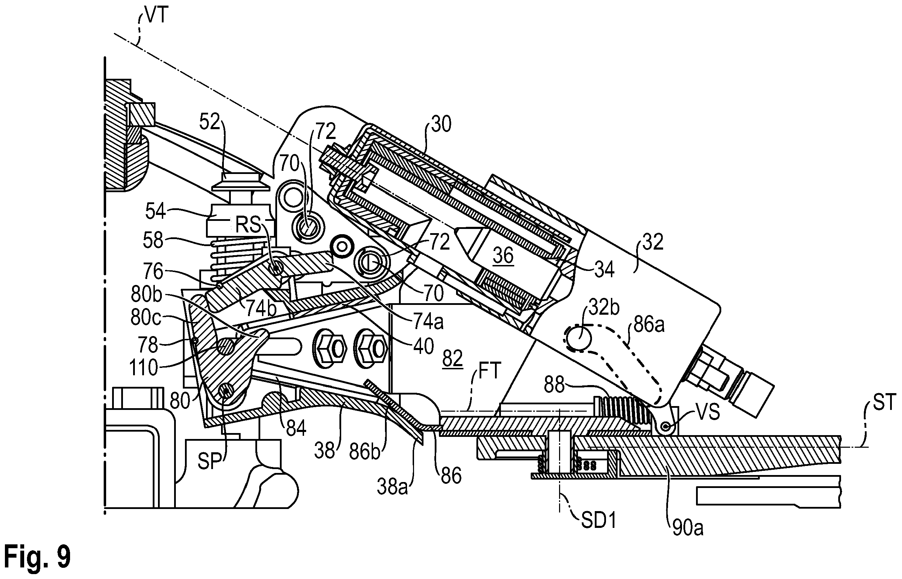

Das Steckerbauteil 32 ist um die Verstauungsschwenkachse VS schwenkbar zwischen einer in Figur 6 gezeigten Verstauungsstellung, in welcher die Steckerformation 36 des nachlauffahrzeugseitigen Steckerbauteils hinter einem die nachlauffahrzeugseitige Ausrichtformation 44 aufweisenden Verdeckungsbauteil 84 verborgen und nicht zur Herstellung einer Steckerverbindung zugänglich ist, und einer in Figur 9 gezeigten vom Untergrund weg verschwenkten Verbindungserwartungsstellung. Das Aufnahmebauteil 82 hat die Form eines Teilgehäuses, welches das Steckerbauteil 32 von wenigstens drei Seiten umgibt, nämlich von unten und zu beiden Seiten. Eine Wandung 32a des Steckerbauteils, welche in der Verstauungsstellung vom Aufstandsuntergrund des Nachlauffahrzeugs wegweist, komplettiert das Aufnahmebauteil 82 zusammen mit dem Verdeckungsbauteil 84 zu einem - abgesehen von Spaltfugen an den Bauteilgrenzen - kompakten Gehäuse.

Ein Führungsbauteil 86 ist im dargestellten Beispiel längs der Nachlauffahrzeug-Höhenachse NH zwischen dem nachlauffahrzeugseitigen Steckerbauteil 32 und dem Aufnahmebauteil 82 angeordnet und ist am Aufnahmebauteil 82 zur Bewegung ausschließlich längs einer zur Nachlauffahrzeug-Längsachse NL parallelen Führungstrajektorie FT beweglich geführt. Das Führungsbauteil 86 kann mit dem nachlauffahrzeugseitigen Steckerbauteil 32 über eine mechanische Steuerung zur Bewegungs- und Kraftübertragung gekoppelt sein, etwa indem das Führungsbauteil 86 eine Führungskulisse 86a aufweist (siehe Figuren 7 bis 9), in welche ein längs der Nachlauffahrzeug-Querachse NQ vom Steckerbauteil 32 abstehender Nocken 32b eingreift. Auf diese Weise kann durch eine Verlagerung des Führungsbauteils 86 längs der Nachlauffahrzeug-Längsachse NL das nachlauffahrzeugseitige Steckerbauteil 32 von seiner Verstauungsstellung der Figuren 6 und 7 in die Verbindungserwartungsstellung von Figur 9 verstellt werden. Durch eine Schraubendruckfeder 88 kann das Führungsbauteil in seine in Figur 7 gezeigte Startstellung vorgespannt sein, wodurch aufgrund der oben geschilderten mechanischen Kopplung mittelbar das Steckerbauteil 23 in die Verstauungsstellung vorgespant ist.

In Figur 9 befindet sich das Führungsbauteil 86 dagegen in seiner Finalstellung, in welcher sich das nachlauffahrzeugseitige Steckerbauteil 32 in der Verbindungserwartungsstellung befindet.

Das Aufnahmebauteil 82 ist zusammen mit dem Verdeckungsbauteil 84, dem nachlauffahrzeugseitigen Steckerbauteil 32 und dem Führungsbauteil 36 an einem Supportbauteil 90 aufgenommen, welches im dargestellten Beispiel vorteilhaft zweiteilig ausgebildet ist und einen ersten Abschnitt 90a aufweist, welcher an einem zweiten Abschnitt 90b translatorisch relativ zu diesem beweglich geführt vorgesehen ist.

Das nachlauffahrzeugseitige Steckerbauteil 32 ist relativ zum Supportbauteil 90, insbesondere relativ zu dessen erstem Abschnitt 90a um eine erste zur Nachlauffahrzeug-Gierachse NH parallele Steckerdrehachse SD1 rotierbar. Diese Relativbeweglichkeit ist gleichzeitig eine Relativbeweglichkeit des nachlauffahrzeugseitigen Steckerbauteils 32 relativ zur Deichsel 26.

Das Supportbauteil 90, insbesondere dessen zweiter Abschnitt 90b, ist relativ zu der ihn aufnehmenden Deichsel 26 um eine ebenfalls zur Nachlauffahrzeug-Gierachse NH parallele zweite Steckerdrehachse SD2 rotierbar. Somit ist das nachlauffahrzeugseitige Steckerbauteil 32 relativ zur Deichsel 26 um zwei zueinander parallele und parallel zur Deichselkörperhöhenachse DH verlaufende Steckerdrehachsen SD1 und SD2 rotierbar.

Weiterhin ist das nachlauffahrzeugseitige Steckerbauteil 32 relativ zur Deichsel 26 um eine zu den Steckerdrehachsen SD1 und SD2 orthogonale Trajektorie ST translatorisch verlagerbar. Die Trajektorie ST der translatorischen Verlagerbarkeit des nachlauffahrzeugseitigen Steckerbauteils relativ zur Deichsel schwenkt im dargestellten Beispiel um die zweite Steckerdrehachse SD2 mit dem zweiten Abschnitt 90b des Supportbauteils 90 mit.

Die translatorische Verlagerbarkeit des ersten Abschnitts 90a des Supportbauteils 90 und damit des nachlauffahrzeugseitigen Steckerbauteils 32 relativ zum zweiten Abschnitt 90b des Supportbauteils 90 ist durch eine Führungs- und Rückstelleinrichtung 92 realisiert, welche bis auf die Verwendung eines Kugelgelenks der translatorischen Bewegungsführung des Ausrichtbauteils 38 relativ zum Fangmaul 18 entspricht, wie es in Figur 5 dargestellt und beschrieben ist.

Zwei zur gemeinsamen Bewegung mit dem ersten Abschnitt 90a des Supportbauteils 90 verbundene, parallele und in Richtung der Trajektorie ST verlaufende, im Wesentlichen identische Führungsstangen 94 sind am zweiten Abschnitt 90b des Supportbauteils 90 jeweils in einem Lagerabschnitt 96 längs der Trajektorie ST beweglich geführt. Ein topfförmiges Aufsatzbauteil 98 mit einem an dem dem Steckerbauteil 32a zugewandten Längsende vorgesehenen Radialvorsprung 98b umgibt einen Längsendabschnitt einer jeden Führungsstange 94, wobei jede Führungsstange 94 und das an ihr angeordnete Aufsatzbauteil 98 relativ zueinander längs der Trajektorie ST beweglich sind. Eine im Inneren des Aufsatzbauteils 98 zwischen dessen Längsende und dem dem Steckerbauteil 32 fernen Längsende der Führungsstange 94 aufgenommene innere Schraubendruckfeder 100 spannt die Führungsstange 94 und das Aufsatzbauteil 98 relativ zueinander im Sinne einer Ausziehbewegung der Führungsstange 94 aus dem Aufsatzbauteil 98 heraus.

Eine das Aufsatzbauteil radial außen umgebende äußere Schraubendruckfeder 102, welche einenends an einem Dom 104 welcher ortsfest am steckerbauteilfernen Längsende des Aufsatzbauteils 98 angeordnet ist, abgestützt ist und andernends am Lagerabschnitt 96 des zweiten Abschnitts 90b des Supportbauteils 90 abgestützt ist, spannt das Aufsatzbauteil 98 relativ zum zweiten Abschnitt 90b des Supportbauteils 90 im Sinne einer Bewegung des endseitigen Doms 104 vom Lagerabschnitt 96 weg. Ein zur gemeinsamen Bewegung mit der Führungsstange 94 vorgesehener Vorsprung, beispielsweise realisiert durch einen die Führungsstange 94 diametral durchsetzenden Stift 106, welcher in ein Langloch 108 am Aufsatzbauteil 98 eingreift, begrenzt die Relativbeweglichkeit von Führungsstange 94 und Aufsatzbauteil 98 relativ zueinander. Das Langloch 108 verläuft dabei in Richtung der Trajektorie ST, also in Richtung der Relativbeweglichkeit von Führungsstange 94 und Aufsatzbauteil 98.

Die innere und die äußere Schraubendruckfeder 100 bzw. 102 definieren so eine Ruhelage des ersten Abschnitts 90a relativ zum zweiten Abschnitt 90b des Supportbauteils 90, aus welcher heraus der erste Abschnitt 90a relativ zum zweiten Abschnitt 90b in beide entgegengesetzte Richtungen längs der Trajektorie ST auslenkbar ist. Einmal unter Kompression der äußeren Feder 102 ist das Steckerbauteil 32 zum Zugfahrzeug hin beweglich und ein andermal unter Kompression der inneren Feder 100 ist das Steckerbauteil 32 längs der Trajektorie ST vom Zugfahrzeug weg beweglich. Die beschriebene Vorspann- und Rückstellbaugruppe, umfassend Führungsstange 94, Aufsatzbauteil 98, Federn 100 und 102 und Dom 104 ist für beide Führungsstangen gleich aufgebaut.

Aufgrund dieser Relativbeweglichkeit des nachlauffahrzeugseitigen Steckerbauteils 32 relativ zur Deichsel rotatorisch um die beiden Steckerdrehachsen SD1 und SD2 und translatorisch längs der Trajektorie ST kann die Steckerverbindung der Steckerbauteile 30 und 32 miteinander an einem beliebigen Ort realisiert sein, unabhängig von der Lage der mit der Längsmittelachse KL des Kupplungsbolzens zusammenfallenden Abbiegeachse AA. Somit kann das zugfahrzeugseitige Steckerbauteil 30 in der zuvor beschriebenen Weise orthogonal zur Abbiegeachse AA versetzt am Fangmaul 18 angeordnet sein.

Nachfolgend wird mit Bezugnahme auf die Figuren 7 bis 9 die Herstellung eines Formschlusseingriffs zwischen den Ausrichtbauteilen 38 und 40 sowie eine Festlegung derselben aneinander nach Herstellung des Formschlusseingriffs beschrieben.

In Figur 7 ist eine Situation beschrieben, wie sie während einer Annäherung des Zugfahrzeugs an das Nachlauffahrzeug in Annäherungsrichtung AN zur Herstellung einer Kupplungsverbindung mit automatisiert hergestellter Steckerverbindung besteht. Die Ausrichtbauteile 38 und 40 von Zugfahrzeug bzw. Nachlauffahrzeug sind in Längsrichtung der beiden Fahrzeuge voneinander entfernt. Aufgrund der Relativbewegung des Zugfahrzeugs relativ zum Nachlauffahrzeug nähert sich das zugfahrzeugseitige Ausrichtbauteil 38 in Richtung AN an das nachlauffahrzeugseitige Ausrichtbauteil 40 an.

Am nachlauffahrzeugseitigen Ausrichtbauteil 40 ist an dem bei Herstellung einer Kupplungsverbindung dem Zugfahrzeug zugewandten Längsende ein Sperrbügel 110 vorgesehen, welcher eine Ausnehmung 112 in der nachlauffahrzeugseitigen Ausrichtformation 44 in Nachlauffahrzeug-Querrichtung NQ überspannt.

Am Grund der zugfahrzeugseitigen Ausrichtformation 42 befindet sich der Sperrhaken 80 in der Einführstellung, in welcher der Sperrbügel 110 in ein Hakenmaul 80a des Sperrhakens 80 einführbar ist. Das Hakenmaul 80a ist zu seinen beiden Seiten beschränkt durch einen Hakenschenkel 80b und durch einen Auslöseschenkel 80c, welche über eine Hakenbasis 80d verbunden sind, die im dargestellten Beispiel durch die Schwenkachse SP des Sperrhakens 80 durchsetzt ist.

Der Hakenschenkel 80b kragt von der Hakenbasis 80d weg weniger stark aus als der Auslöseschenkel 80c, welcher an dem Betätigungsschenkel 74b des durch die Feder 76 in seine Verriegelungsstellung vorgespannten Riegels 74 anliegt.

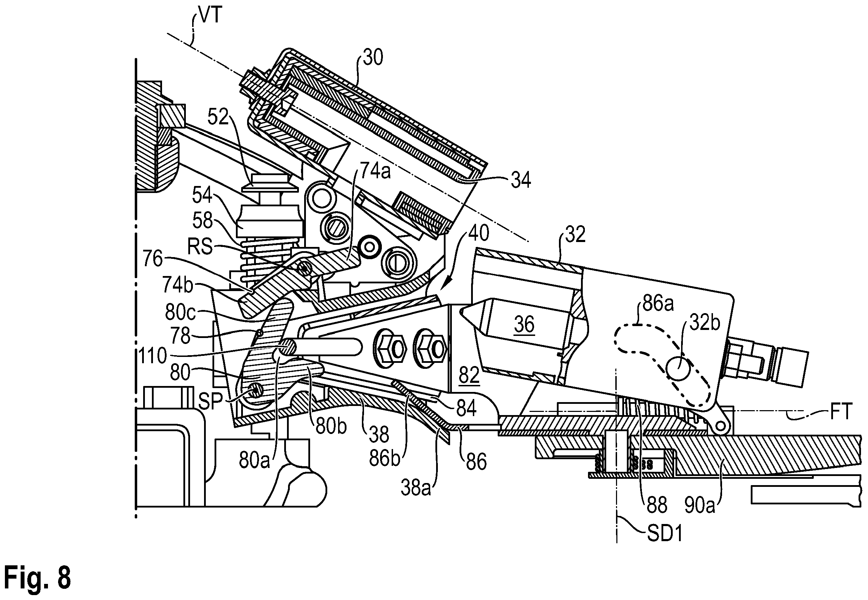

In Figur 8 ist die Annäherung des Zugfahrzeugs und damit des zugfahrzeugseitigen Kupplungsbauteils 14 an das nachlauffahrzeugseitige Kupplungsbauteil 24 soweit fortgeschritten, dass der Sperrbügel 110 am Auslöseschenkel 80c anliegt.

Ebenso liegt ein Anlageabschnitt 86b des Führungsbauteils 86 an einem Gegenanlageabschnitt 38a des zugfahrzeugseitigen Ausrichtbauteils 38 an. Der Gegenanlageabschnitt wird im dargestellten Beispiel gebildet durch eine untere Einführschräge der zugfahrzeugseitigen Ausrichtformation 42. Der Anlageeingriff des Anlageabschnitts 86b am Gegenanlageabschnitt 38a wurde bereits zu einem früheren Zeitpunkt hergestellt, als das zug- und nachlauffahrzeugseitige Kupplungsbauteil 14 bzw. 24 zwar stärker als in Figur 7, aber weniger stark als in Figur 8 gezeigt, einander angenähert waren. Durch die nach Herstellung des Anlageeingriffs des Führungsbauteils 86 mit dem zugfahrzeugseitigen Ausrichtbauteil 38 fortgesetzte Annäherungsbewegung von zug- und nachlauffahrzeugseitigen Kupplungsbauteil 14 bzw. 24 aneinander wurde das Führungsbauteil 86 relativ zum Aufnahmebauteil 82 und somit auch relativ zum nachlauffahrzeugseitigen Steckerbauteil 32 längs der Nachlauffahrzeug-Längsachse NL bewegt, sodass weiter aufgrund des Formschlusseingriffs des Nockens 32b mit der Kulisse 86a in den Seitenschenkeln des Führungsbauteils 86 eine Schwenkbewegung des Steckerbauteils 32 von der Verstauungsstellung der Figur 7 in Richtung zur Verbindungserwartungsstellung von Figur 9 begonnen hat.

Durch die in Figur 8 dargestellte Anlage des Sperrbügels 110 am Auslöseschenkel 80c des Sperrhakens 80 wird bei fortgesetzter Annäherung von zug- und nachlauffahrzeugseitigen Kupplungsbauteil 14 bzw. 24 aneinander der Sperrhaken 80 durch den Sperrbügel 10 in seine in Figur 9 gezeigte Sperrstellung verstellt. Dabei streicht die Spitze des Auslöseschenkels 80c entlang des Betätigungsschenkels 74b des Riegels 74 und verstellt den Riegel 74 in die Freigabestellung, in welcher der Verriegelungsschenkel 74a außer Eingriff mit der Verriegelungsausnehmung 66b des Antriebsbauteils 66 gelangt, sodass das Antriebsbauteil 66 getrieben von den Schraubendruckfedern 72 von seiner Startstellung in die Endstellung verlagert wird. Dadurch wird das zugfahrzeugseitige Steckerbauteil 30 längs der Verbindungstrajektorie von der in den Figuren 7 und 8 gezeigten Verbindungsbereitschaftsstellung in die in Figur 9 gezeigte Verbindungsaktivierungsstellung verstellt.

In der in Figur 9 gezeigten Sperrstellung des Sperrhakens 80 hat der Auslöseschenkel 80c den Betätigungsschenkel 74b des Riegels 74 vollständig überstrichen, sodass ein Längsende des Betätigungsschenkels 74b aufgrund der Vorspannung des Riegels 74 in dessen Verriegelungsstellung in Anlage an eine zum Nachlauffahrzeug hinweisende Flanke des Auslöseschenkels 80c gelangt und somit den Sperrhaken 80 in seiner Sperrstellung gegen eine Verlagerung aus dieser heraus in Richtung zur Einführstellung hin sperrt.

Weiterhin ist in der in Figur 9 gezeigten Stellung die Ausnehmung 112 durch den Hakenschenkel 80b durchsetzt, sodass der in der Sperrstellung des Sperrhakens 80 im Hakenmaul 80 aufgenommene Sperrbügel 110 vom Hakenschenkel 80b hintergriffen ist. Die Ausrichtbauteile 38 und 40 sind somit aneinander festgelegt und gegen ein Lösen ihres Formschlusseingriffs gesichert.

In der in Figur 9 gezeigten Stellung hat das Führungsbauteil 86 seine Finalstellung erreicht, sodass sich das nachlauffahrzeugseitige Steckerbauteil 32 in der Verbindungserwartungsstellung befindet, in welcher eine Steckerverbindung mit dem zugfahrzeugseitigen Steckerbauteil 30 durch dessen Verlagerung längs der Verbindungstrajektorie VT in die Verbindungsaktivierungsstellung einfach herstellbar ist.

Gemäß einer bevorzugten Weiterbildung der vorliegenden Erfindung werden die Steckerbauteile 30 und 32 bei hergestellter Steckerverbindung nicht gesondert aneinander positionsgesichert, insbesondere nicht aneinander verrastet und dgl. Die Steckerbauteile 30 und 32 werden schlicht einander angenähert und die jeweiligen Steckerformationen in Kontakteingriff gebracht, gegebenenfalls ineinander verschoben.

Die in Figur 9 gezeigte Relativstellung von zug- und nachlauffahrzeugseitigem Kupplungsbauteil 14 bzw. 24, in welcher der Formschlusseingriff der Ausrichtbauteile 38 und 40 gegen Trennung des Formschlusseingriffs gesichert ist, wird gemäß einer bevorzugten Weiterbildung der vorliegenden Erfindung wie folgt aufgehoben:
Wie insbesondere in Figur 4 zu erkennen ist, ist das zur Bewegung des Kupplungsbolzens aus der Zugöse 20 heraus vorgesehene Kinetrol 22 über einen Bowdenzug 120 auch mit dem Antriebsbauteil 66 verbunden. Dann, wenn das Kinetrol 22 den Kupplungsbolzen aus einer Stellung, in welcher er die Zugöse 20 des Nachlauffahrzeugbauteils durchsetzt, zur Freigabe derselben anhebt, wird auch das Antriebsbauteil 66 unter Spannung der Schraubendruckfedern 72 zurück in seine Startstellung verstellt. Eine Anlaufschräge 66c des Antriebsbauteils 66 drückt bei dieser Rückstellbewegung, bei welcher aufgrund der Zwangsführung durch den Nocken 66a und die Kulisse 30a auch das zugfahrzeugseitige Steckerbauteil 30 zurück in die Verbindungsbereitschaftsstellung verstellt wird, auf den Verriegelungsschenkel 74a des Riegels 74 und drückt diesen nach unten, sodass sich der Betätigungsschenkel 74b desselben Riegels 74 hebt. Bei dieser Hebebewegung wird der Auslöseschenkel 80c des Sperrhakens 80 freigegeben, sodass sich diese, getrieben durch die Vorspannkraft der Feder 78 zurück in Richtung Einführstellung bewegt bzw. bewegen kann. Somit kann das nachlauffahrzeugseitige Ausrichtbauteil 40 aus dem Formschlusseingriff mit dem zugfahrzeugseitigen Ausrichtbauteil 38 heraus bewegt werden und zwar in Richtung der Annäherungsbewegung AN. Bei dieser Bewegung unterstützt der dann gegen den Hakenschenkel 80b drückende Sperrbügel 110 eine Verstellung des Sperrhakens 80 zurück in die Einführstellung. Die Kupplungsbauteile 14 und 24 und können dann ohne Weiteres voneinander getrennt werden, da zwischen ihren Bauteilen keinerlei Sperr- oder Verriegelungseingriff mehr besteht.

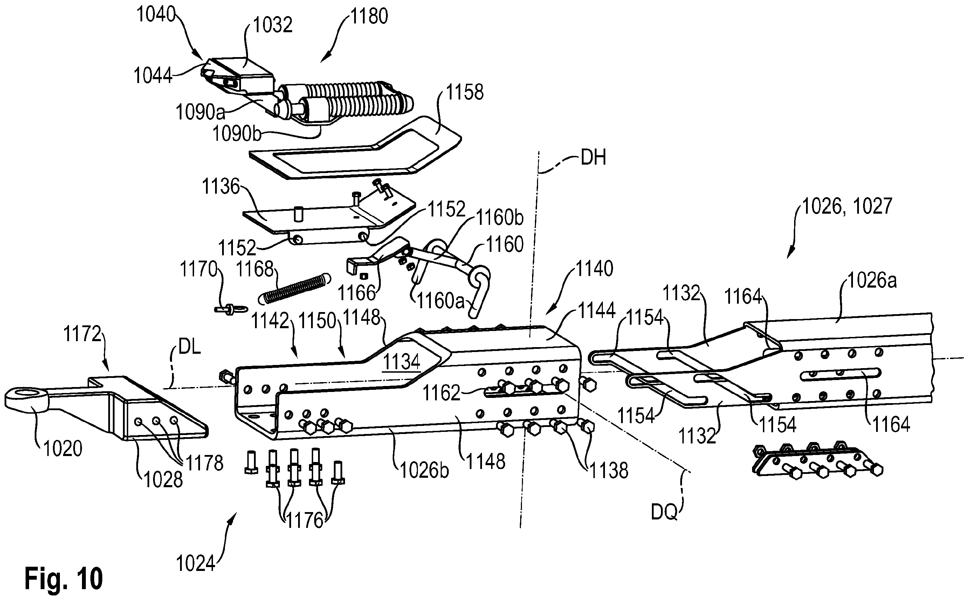

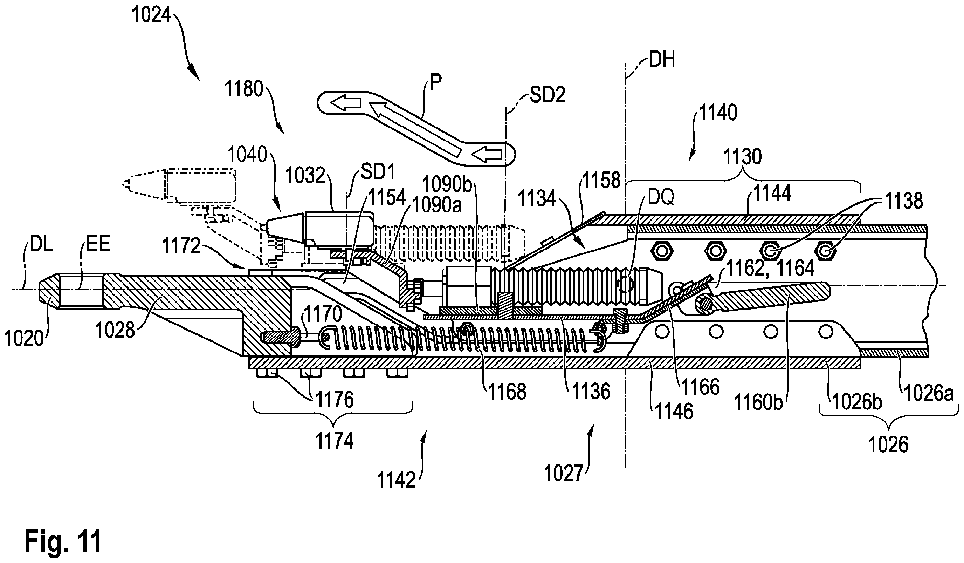

In den Figuren 10 und 11 ist eine besonders vorteilhafte Deichsel 1026 des Nachlauffahrzeugs dargestellt. Gleiche und funktionsgleiche Bauteile bzw. Bauteilabschnitte wie an der Deichsel 26 der Figuren 1 bis 9 sind in den Figuren 10 bis 11 mit gleichen Bezugszeichen versehen, jedoch erhöht um die Zahl 1000. Die Deichsel 1026 wird nachfolgend nur insofern beschrieben, als sie sich von der oben beschriebenen Deichsel 26 unterscheidet, auf deren Beschreibung ansonsten ausdrücklich verwiesen wird.

Die Deichsel 1026 weist einen Deichselkörper 1027 mit einem ersten Deichselkörper-Bauteil 1026a auf, welches sich längs der Deichselkörper-Längsachse DL von einem dem Nachlauffahrzeugkörper näher gelegenen Fahrzeug-Längsende der Deichsel 1026 weg zu einem durch die Zugöse 1020 markierten axial bezogen auf die Deichselkörper-Längsachse DL entgegengesetzten Kupplungs-Längsende der Deichsel 1026 hin. In axialer Richtung vom Fahrzeug-Längsende weg schließt sich an das erste Deichselkörper-Bauteil 1026a das zweite Deichselkörper-Bauteil 1026b des Deichselkörpers 1027 an, welches mit dem ersten Deichselkörper-Bauteil 1026a in einem Festlege-Abschnitt 1130 (siehe Figur 11) befestigt ist. In diesem Festlege-abschnitt 1130 umgibt das zweite Deichselkörper-Bauteil 1026b das erste Deichselkörper-Bauteil 1026a radial außen, bevorzugt mit sehr geringen Spaltmaßen zwischen den einander gegenüberliegenden Wandabschnitten der Deichselkörper-Bauteile 1026a und 1026b. Besonders bevorzugt liegen wenigstens Teile der einander gegenüberliegenden Wandabschnitte von erstem und zweiten Deichselkörper-Bauteil 1026a bzw. 1026b im fertig montierten Zustand aneinander an.

Das erste Deichselkörper-Bauteil 1026a weist bei Betrachtung in einer zur Deichselkörper-Längsachse DL orthogonalen Schnittebene einen rechteckigen geschlossenen Querschnitt auf. Die Ecken des rechteckigen Querschnitts sind abgerundet ausgebildet.

Längs der Deichselkörper-Längsachse DL und längs der Deichselkörper-Höhenachse DH verlaufende Seitenwände des ersten Deichselkörper-Bauteils 1026a sind als Seitenwangen 1132 axial verlängert, um diese als Führungsabschnitte zur Bewegungsführung eines in einen Innenraum 1134 der Deichsel 1026 hinein absenkbaren Deckels 1136 zu nutzen.

Im Festlegeabschnitt 1130 sind das erste und das zweite Deichselkörper-Bauteil 1026a bzw. 1026b ausschließlich durch Befestigungsmittel, hier: Schrauben-Muttern-Kombinationen 1138, mit zur Deichselkörper-Längsachse DL orthogonalem Verlauf miteinander verbunden. Die Befestigungsmittel 1138 durchsetzen sowohl das erste wie auch das zweite Deichselkörper-Bauteil 1026a bzw. 1026b in einer Richtung orthogonal zur Deichselkörper-Längsachse DL.

Das zweite Deichselkörper-Bauteil 1026b weist einen ersten Bauteilabschnitt 1140 auf, welcher bei Betrachtung in einer zur Deichselkörper-Längsachse DL orthogonalen Schnittebene ebenfalls einen geschlossenen Querschnitt aufweist, ebenso wie das erste Deichselkörper-Bauteil 1026a.

Dem Bauteilabschnitt 1140 mit geschlossenem Querschnitt axial benachbart ist ein Bauteilabschnitt 1142 des zweiten Deichselkörper-Bauteils 1026b, in welchem das zweite Deichselkörper-Bauteil 1026b einen offenen Querschnitt aufweist. Der Bauteilabschnitt 1140 mit geschlossenem Querschnitt ist dabei der näher am ersten Deichselkörper-Bauteil 1026a gelegene, der auch zum Festlegeabschnitt 1130 beiträgt, während der Bauteilabschnitt 1142 mit offenem Querschnitt dem Kupplungs-Längsende der Deichsel 1026 näher gelegen ist.

Im Bauteilabschnitt 1140 mit geschlossenem Querschnitt weist das zweite Deichselkörper-Bauteil 1140 ebenfalls einen rechteckigen geschlossenen Querschnitt auf, umfassend eine Deichselkörperdecke 1144, einen von diesem längs der Deichsel-Höhenachse DH mit Abstand angeordneten Deichselkörper-Boden 1146 und zwei längs der Deichsel-Querachse DQ mit Abstand voneinander angeordnete Deichselkörper-Seitenschenkel 1148. Die Deichselkörper-Seitenschenkel 1148 verbinden die Deichselkörper-Decke 1144 mit dem Deichselkörper-Boden 1146.

Im Deichselkörper-Abschnitt 1142 mit offenem Querschnitt weist das zweite Deichselkörper-Bauteil 1026b nur den Deichselkörper-Boden 1148 und zwei parallele davon abstehende Deichselkörper-Seitenschenkel 1148 auf. In dem Deichselkörper-Abschnitt 1142 ist demnach keine Deichselkörper-Decke 1144 vorhanden. Darüber hinaus sind die Deichselkörper-Seitenschenkel 1148 in einem von dem der Zugöse 1020 nächstgelegenen Längsende des zweiten Deichselkörper-Bauteils 1026b ausgehenden Bereich des Deichselkörper-Abschnitts 1142 mit offenem Querschnitt längs der Deichselkörper-Höhenachse DH kürzer ausgebildet als im Deichselkörper-Abschnitt 1140 mit geschlossenem Querschnitt. Somit ist in dem Deichselkörper-Abschnitt 1142 mit offenem Querschnitt eine von außen zugängliche Öffnung 1150 gebildet, durch welche hindurch der Innenbereich 1134 der Deichsel 1026 zugänglich ist.

Durch diese Öffnung 1150 können beispielsweise Gegenstände, wie etwa Bordwerkzeug und dgl., in den Innenraum 1134 der Deichsel 1026 abgelegt und in geeigneter Weise befestigt werden. Somit ist die Deichsel 1026 beispielsweise als Stauraum nutzbar.

Im vorliegenden Ausführungsbeispiel ist die Öffnung 1150 durch den zuvor bereits erwähnten Deckel 1136 verschließbar und wahlweise zum Eingriff freigebbar. Der Deckel 1136 ist in seiner Gestalt der Öffnung 1150 nachgebildet, die er verschließen soll. An seinen Seiten weist der Deckel 1136 Vorsprünge 1152 auf, welche in Kulissenführungen 1154 in den Seitenwangen 1132 ausgebildet sind, die als Axial-Verlängerungen der Deichselkörper-Seitenschenkel des ersten Deichselkörper-Bauteils 1026a gebildet sind. Der Deckel 1136 ist somit längs der Deichselkörper-Höhenachse DH sowie längs der Deichselkörper-Längsachse DL in den Innenbereich 1134 der Deichsel 1026 absenkbar und einziehbar. In Figur 11 ist der Deckel 1136 mit durchgezogenem Strich in seiner in den Deichselinnenraum 1134 eingezogenen Inaktivstellung gezeigt und ist mit strichpunktierter Linie in seiner Aktivstellung gezeigt, in welcher er die Öffnung 1150 verschließt. Der Deckel 1136 ist längs der Pfeilfolge P in Figur 11 von der Inaktivstellung in die Aktivstellung verlagerbar.

Zur Abdichtung der Öffnung 1150 in der Aktivstellung des Deckels 1136 ist an der Öffnung 1150 eine Dichtung 1158 vorgesehen, an deren zum Deichselinnenbereich 1134 hinweisender Seite der Deckel 1136 in der Aktivstellung anliegt. Die Dichtung 1158 kann beispielsweise aus einer Gummimatte oder allgemein einer Elastomermatte ausgeschnitten sein.

Zur Verstellung des Deckels 1136 zwischen der Aktivstellung und der Inaktivstellung kann dieser mit einem Handbetätigungsglied 1160 gekoppelt sein, welches im dargestellten Beispiel die Deichsel 1026 längs der Deichselkörper-Querachse DQ durchsetzt. Hierzu weisen die Deichselkörper-Seitenschenkel 1148 im Bauteilabschnitt 1140 mit geschlossenem Querschnitt in axiale Richtung bezogen auf die Deichselkörper-Längsachse DL verlaufende Langlöcher 1162 auf, welche im fertig montierten Zustand von in etwa gleichformatigen Langlöchern 1164 in den Seitenschenkeln des ersten Deichselkörper-Bauteils 1026a überlagert sind.

Das Handbetätigungsglied weist beiderseits der Deichsel 1026 je einen Handeingriffsabschnitt 1160a auf, welche von außerhalb der Deichsel 1026 durch eine Bedienperson leicht ergriffen werden können.

Das Handbetätigungsglied 1160 ist außerdem über eine Verbindungsstange 1160b gelenkig mit einem Verbindungselement 1166 verbunden, welches einerseits, wie in Figur 11 erkennbar ist, mit dem Deckel 1136 verbunden ist, und welches andererseits als Federwiderlager für eine Vorspann-Schraubendruckfeder 1168 dient, die den Deckel 1136 in die Aktivstellung vorspannt. In den Figuren 10 und 11 nicht dargestellte Festlegemittel können vorgesehen sein, um den Deckel 1136 gegen die Vorspannkraft der Feder 1168 in der Inaktivstellung vorübergehend festzulegen.

Wie weiter in Figur 11 zu erkennen ist, ist das entgegengesetzte Federwiderlager der Schraubendruckfeder 1168 am Zugösen-Bauteil 1028 festgelegt, beispielsweise durch eine in dieses eingedrehte Ringschraube 1170.

Das Zugösen-Bauteil 1028 ist in seiner Gestalt und in seiner Befestigung am Deichselkörper 1027, genauer am zweiten Deichselkörper-Bauteil 1026b, ebenfalls bemerkenswert:
Das Zuösen-Bauteil 1028 weist einerseits an einem Längsende die Zugöse 1020 auf und weist an seinem anderen Längsende eine Befestigungsformation 1172 auf.

Das Zugösen-Bauteil 1028, insbesondere seine Befestigungsformation 1172, ist im fertig montierten Zustand von nur drei Seiten von der Deichsel 1026, genauer vom zweiten Deichselkörper-Bauteil 1026b, noch genauer von dem Deichselkörper-Abschnitt 1142 mit offenem Querschnitt, bezogen auf die Deichselkörper-Längsachse DL radial außen umgeben. Dies bedeutet, die Befestigungsformation 1172 des Zugösen-Bauteils 1028 liegt auf dem Deichselkörper-Boden 1148 der Deichsel 1026, genauer des zweiten Deichselkörper-Bauteils 1026b, auf und ist längs der Deichselkörper-Querachse DQ zu beiden Seiten von den Deichselkörper-Seitenschenkeln 1148 eingefasst, die in dem betreffenden Überlappungsabschnitt mit der Befestigungsformation 1172 des Zugösen-Bauteils 1028 in Deichselkörper-Höhenrichtung verglichen mit dem Abschnitt 1140 mit geschlossenem Querschnitt verkürzt ausgebildet sind.

Insbesondere ist das Zugösen-Bauteil 1028 axial in einer Auszugsrichtung aus dem Deichselkörper 1027, also zu einem vor der Deichsel 1026 befindlichen Zugfahrzeug hin, nicht formschlüssig durch einen Deichselkörper-Abschnitt umgriffen oder sonst wie hintergriffen.

Wie bereits die beiden Deichselkörper-Bauteile 1026b und 1026a ist auch das Zugösen-Bauteil 1028 in dem mit ihm überlappenden Deichselkörper-Befestigungsabschnitt 1174 des zweiten Deichselkörper-Bauteils 1026b ausschließlich mit Befestigungsmitteln am zweiten Deichselkörper-Bauteil 1026b befestigt, welche das zweite Deichselkörper-Bauteil 1026b in einer Richtung orthogonal zur Deichselkörper-Längsachse DL durchsetzen und die Befestigungsformation 1172 des Zugösen-Bauteils 1028 entweder ebenfalls orthogonal zur Deichselkörper-Längsachse DL durchsetzen oder in dieser Richtung in die Befestigungsformation einragen. Im dargestellten Beispiel sind die Befestigungsmittel 1176 in Form von Schrauben in Sacklöcher 1178 in der Befestigungsformation 1172 des Zugösen-Bauteils 1028 eingedreht. Die Sacklöcher 1178 sind hierzu mit einem Innengewinde versehen. Die Befestigungsformation 1172 ist im dargestellten Beispiel U-förmig ausgebildet, wobei die beiden Seitenschenkel der Befestigungsformation 1172 längs der Deichselkörper-Längsachse DL von der die Seitenschenkel verbindenden Basis der Befestigungsformation 1172 abstehen. mit der Basis ist die Zugöse 1020 vorzugsweise einstückig materialschlüssig verbunden.

Die Durchgangslöcher für Schrauben sowie die Durchgangslanglöcher 1162 und 1164 in den jeweiligen Deichselkörper-Bauteilen 1026a und 1026b sind geringfügige Durchsetzungen dieser Bauteile und sollen nichts an der Beurteilung des sie tragenden Abschnitts als einem Abschnitt mit geschlossenem Querschnitt ändern.

Der Deckel 1136 kann nicht nur die Öffnung 1150 verschließen, sondern kann außerdem eine Funktionsbaugruppe tragen, wie etwa die oben ausführlich beschriebene Baugruppe 1180 zur automatisierten Herstellung einer Energie oder/und Information übertragenden Verbindung mit einem an die Deichsel 1026 angekuppelten Zugfahrzeug.

In Figur 11 ist die Funktionsbaugruppe 1180 mit durchgezogener Linie in ihrer Nicht-Gebrauchsstellung, also mit dem Deckel 1136 in der Inaktivstellung, dargestellt. In vorteilhafter Weise ist die Funktionsbaugruppe 1180, die in der Aktivstellung des Deckels 1136 nahe an das zugfahrzeugseitige Kupplungsbauteil herangeführt ist, mit dem die Zugöse 1020 kuppelbar ist, in der Inaktivstellung des Deckels 1136 innerhalb der Einhüllenden des zweiten Deichselkörper-Bauteils 1026b aufgenommen, welche man erhält, wenn man dessen Abschnitt 1140 mit geschlossenem Querschnitt über die ganze axiale Länge des zweiten Deichselkörper-Bauteils 1026b fortgesetzt denkt. Durch die so erhaltene geringe Auskragabmessung der Funktionsbaugruppe 1180 in ihrer Nicht-Gebrauchsstellung ist deren Beschädigungsrisiko bei Nichtgebrauch erheblich reduziert. Teile der Funktionsbaugruppe 1180 sind in deren Nicht-Gebrauchsstellung sogar im Inneren 1134 der Deichsel 1026 aufgenommen und ist allseits von einer Deichselwandung des Abschnitts 1140 mit geschlossenem Querschnitt umgeben.

## Patentansprüche

1. Kupplungsbauteil (24) einer Kupplungsvorrichtung (10) zur vorübergehenden Verbindung eines Zugfahrzeugs (12) mit einem Nachlauffahrzeug zur Bildung eines Fahrzeugzuges, wobei das Kupplungsbauteil (24) zur Anordnung an einem Trägerfahrzeug aus Zug- und Nachlauffahrzeug ausgebildet und zur Bildung einer vorübergehenden lösbaren Kupplungsverbindung mit einem weiteren Kupplungsbauteil (14) kuppelbar ist, welches zur Anordnung am jeweils anderen Fahrzeug ausgebildet ist, wobei die Kupplungsverbindung zur Übertragung einer ein Nachlaufen des Nachlauffahrzeugs im Fahrzeugzug begründenden Zugkraft ausgebildet ist, wobei das Kupplungsbauteil (24) umfasst:
- einen Kupplungsbauteilkörper (27) mit einem an diesem vorgesehenen Kupplungsglied (20) zur Herstellung eines Kupplungsverbindungseingriffs mit einem Kupplungsglied des weiteren Kupplungsbauteils (14),
- ein Steckerbauteil (32) mit wenigstens einer Steckerformation (36) als Schnittstelle einer Versorgungsleitung des Trägerfahrzeugs zur Übertragung von Energie oder/und Information, wobei das Steckerbauteil (32) zur Bildung einer vorübergehenden Energie oder/und Information übertragenden lösbaren Steckerverbindung mit einem weiteren Steckerbauteil (30) des weiteren Kupplungsbauteils (14) ausgebildet ist,
- ein gesondert sowohl vom Kupplungsbauteilkörper (27) als auch vom Kupplungsglied (20) ausgebildetes und am Kupplungsbauteilkörper (27) angeordnetes Ausrichtbauteil (40), welches das Steckerbauteil (32) trägt,
wobei das Ausrichtbauteil (40) eine Ausrichtformation (44) aufweist und relativ zu dem Kupplungsbauteilkörper (27) beweglich ist, so dass die Ausrichtformation (44) des Ausrichtbauteils (40) zur steckerverbindungsvorbereitenden Ausrichtung des Steckerbauteils (32) für einen Formschlusseingriff mit einer weiteren Ausrichtformation (42) eines weiteren Ausrichtbauteils (38) des weiteren Kupplungsbauteils (14) ausgebildet ist,
wobei das Steckerbauteil (32) relativ zum Ausrichtbauteil (40) oder/und relativ zum Kupplungsbauteilkörper (27) verlagerbar ist zwischen einer Verstauungsstellung, in der seine wenigstens eine Steckerformation (36) für eine Herstellung einer Steckerverbindung nicht zugänglich ist, und einer Verbindungserwartungsstellung, in der seine wenigstens eine Steckerformation (36) für eine Herstellung einer Steckerverbindung zugänglich ist,
**dadurch gekennzeichnet, dass** das Steckerbauteil (32) zwischen der Verstauungsstellung und der Verbindungserwartungsstellung verschwenkbar ist.

2. Kupplungsbauteil nach Anspruch 1,
**dadurch gekennzeichnet, dass** das Steckerbauteil (32) an einem Aufnahmebauteil (82) relativ zu diesem beweglich geführt ist.

3. Kupplungsbauteil nach Anspruch 2,
**dadurch gekennzeichnet, dass** an dem Aufnahmebauteil (82) ein Führungsbauteil (86) vorgesehen ist, welches sowohl relativ zum Aufnahmebauteil (82) als auch relativ zum Steckerbauteil (32) beweglich ist, wobei es am Aufnahmebauteil (82) längs einer Führungstrajektorie (FT) beweglich zwischen einer Startstellung und einer Finalstellung geführt ist und wobei es derart mit dem Steckerbauteil (32) zur gemeinsamen Bewegung gekoppelt ist, dass dann, wenn sich das Führungsbauteil (86) in der Startstellung befindet, sich das Steckerbauteil (32) in der Verstauungsstellung befindet und dann, wenn sich das Führungsbauteil (86) in der Finalstellung befindet, sich das Steckerbauteil (32) in der Verbindungserwartungsstellung befindet.

4. Kupplungsbauteil nach Anspruch 3,
**dadurch gekennzeichnet, dass** das Führungsbauteil (86) einen Anlageabschnitt (86a) aufweist, welcher zur Anlage an ein Bauteil (38) des das weitere Steckerbauteil (30) tragenden jeweils anderen Fahrzeugs aus Zugfahrzeug und Nachlauffahrzeug ausgebildet ist.

5. Kupplungsbauteil nach Anspruch 4,
**dadurch gekennzeichnet, dass** der Anlageabschnitt (86a) zur Anlage an ein Bauteil (38) aus dem weiteren Kupplungsbauteil (14) oder dem weiteren Ausrichtbauteil (38) ausgebildet ist.

6. Kupplungsbauteil nach einem der vorhergehenden Ansprüche,
**dadurch gekennzeichnet, dass** sich wenigstens eine Steckerformation (36) des Steckerbauteils (32) dann, wenn sich dieses in seiner Verstauungsstellung befindet, in einer Aufsteckrichtung (VT), in welcher allein aufgrund der Bauart der Steckerformation (36) eine Steckerverbindung mit diesem grundsätzlich herstellbar wäre, hinter einem Verdeckungsbauteil (84) befindet.

7. Kupplungsbauteil nach Anspruch 6,
**dadurch gekennzeichnet, dass** das Verdeckungsbauteil (84) auf seiner in der Verstauungsstellung des Steckerbauteils (32) von diesem weg weisenden Seite die Ausrichtformation (44) des das Steckerbauteil (32) tragenden Ausrichtbauteils (40) aufweist.

8. Kupplungsbauteil nach einem der vorhergehenden Ansprüche,
**dadurch gekennzeichnet, dass** das Steckerbauteil (32) oder/und das Ausrichtbauteil (40) relativ zum Kupplungsbauteil (24) jeweils um zwei mit Abstand voneinander angeordnete, zueinander parallele und in Höhenrichtung (DH) des Kupplungsbauteilkörpers (27) verlaufenden Steckerdrehachsen (SD1, SD2) rotatorisch beweglich und längs einer zu den Steckerdrehachsen (SD1, SD2) orthogonalen Trajektorie (ST) translatorisch beweglich angeordnet ist.

9. Kupplungsbauteil nach Anspruch 8,
**dadurch gekennzeichnet, dass** der Abstand der Steckerdrehachsen (SD1, SD2) aufgrund der translatorischen Beweglichkeit des Steckerbauteils (32) oder/und des Ausrichtbauteils (40) veränderlich ist oder/und dass die beiden Steckerdrehachsen (SD1, SD2) gemeinsam translatorisch beweglich angeordnet sind.

10. Kupplungsbauteil nach Anspruch 8 oder 9,
**dadurch gekennzeichnet, dass** wenigstens eine Steckerdrehachse (SD1, SD2) mit Abstand von der Längsmittelachse des Kupplungsglieds vorgesehen ist.

11. Kupplungsbauteil nach Anspruch 10,
**dadurch gekennzeichnet, dass** in einem von äußeren Kräften freien Zustand beide Steckerdrehachsen (SD1, SD2) mit Abstand vom Kupplungsglied (20) vorgesehen sind.

12. Kupplungsbauteil nach einem der Ansprüche 8 bis 11,
**dadurch gekennzeichnet, dass** das Steckerbauteil (32) oder/und das Ausrichtbauteil (40) relativ zu einem Supportbauteil (90, 90a, 90b) um eine erste der zwei Steckerdrehachsen (SD1) drehbar angeordnet ist und dass das Supportbauteil (90, 90a, 90b) um die zweite Steckerdrehachse (SD2) relativ zum Kupplungsbauteilkörper (27) drehbar angeordnet ist.

13. Kupplungsbauteil nach Anspruch 12,
**dadurch gekennzeichnet, dass** das Steckerbauteil (32) oder/und das Ausrichtbauteil (40) relativ zum Supportbauteil (90b) längs der zu den Steckerdrehachsen (SD1, SD2) orthogonalen Trajektorie (ST) translatorisch verlagerbar ist.

14. Kupplungsbauteil nach Anspruch 13,
**dadurch gekennzeichnet, dass** das Steckerbauteil (32) relativ zum Supportbauteil (90b) gegen die Rückstellkraft einer Rückstelleinrichtung (92) längs der der zu den Steckerdrehachsen (SD1, SD2) orthogonalen Trajektorie (ST) verlagerbar ist.

15. Kupplungsbauteil nach Anspruch 13 oder 14,
**dadurch gekennzeichnet, dass** das Steckerbauteil (32) längs einer Mehrzahl paralleler und mit Abstand voneinander angeordneter Führungsvorrichtungen (94) zur Bewegung längs der Trajektorie (ST) geführt ist.

## Claims

1. A hitch component (24) of a hitching apparatus (10) for temporary connection of a towing vehicle (12) to a towed vehicle in order to constitute a vehicle combination, the hitch component (24) being embodied for arrangement on a carrier vehicle from among the towing vehicle and towed vehicle and being couplable, for constitution of a temporary releasable hitched connection, to a further hitch component (14) that is embodied for arrangement on the respective other vehicle, the hitched connection being embodied for transfer of a towing force as a basis for towing of the towed vehicle in the vehicle combination, the hitch component (24) encompassing:
- a drawbar, constituting a hitch component body (27), having a hitching member (20) provided thereon for establishing a hitched connection engagement with a hitching member of the further hitch component (14);
- an insertion-connector component (32) having at least one insertion-connector configuration (36), constituting an interface of a supply line of the carrier vehicle for transferring energy and/or information, the insertion-connector component (32) being embodied to constitute a temporary energy- and/or information-transferring releasable insertion-connector connection to a further insertion-connector component (30) of the further hitch component (14);
- an alignment component (40) that is embodied separately both from the hitch component body (27) and from the hitching member (20) and is arranged on the hitch component body (27), and carries the insertion-connector component (32),
the alignment component (40) comprising an alignment configuration (44) and being movable relative to the hitch component body (27) so that the alignment configuration (44) of the alignment component (40) is embodied for insertion-connector-connection-preparing alignment of the insertion-connector component (32) for positive engagement with a further alignment configuration (42) of a further alignment component (38) of the further hitch component (14),
the insertion-connector component (32) being displaceable, relative to the alignment component (40) and relative to the hitch component body (27), between a stowage position in which its at least one insertion-connector configuration (36) is not accessible for establishment of an insertion-connector connection, and a connection expectation position in which its at least one insertion-connector configuration (36) is accessible for establishment of an insertion-connector connection,
**characterized in that** the insertion-connector component (32) is pivotable between the stowage position and the connection expectation position.

2. The hitch component according to Claim 1,
**characterized in that** the insertion-connector component (32) is guided on a receiving component (82) movably relative thereto.

3. The hitch component according to Claim 2,
**characterized in that** there is provided on the receiving component (82) a guidance component (86) which is movable both relative to the receiving component (82) and relative to the insertion-connector component (32), it being guided on the receiving component (82) movably along a guidance trajectory (FT) between a starting position and a final position, and it being coupled to the insertion-connector component (32) for movement together in such a way that the insertion-connector component (32) is in the stowage position when the guidance component (86) is in the starting position, and the insertion-connector component (32) is in the connection expectation position when the guidance component (86) is in the final position.

4. The hitch component according to Claim 3,
**characterized in that** the guidance component (86) comprises an abutment portion (86a) that is embodied for abutment against a component (38) of the respective other vehicle, from among the towing vehicle and towed vehicle, which carries the further insertion-connector component (30).

5. The hitch component according to Claim 4,
**characterized in that** the abutment portion (86a) is embodied for abutment against one component (38) from among the further hitch component (14) of the further alignment component (38).

6. The hitch component according to one of the preceding claims,
**characterized in that** when the insertion-connector component (32) is in its stowage position, at least one insertion-connector configuration (36) of that component is located behind a screening component (84) in an insertion direction (VT) in which an insertion-connector connection with said component could in principle be established solely as a result of the design of the insertion-connector configuration (36).

7. The hitch component according to Claim 6,
**characterized in that** the screening component (84) comprises, on its side that faces away from the insertion-connector component (32) when the latter is in the stowage position, the alignment configuration (44) of the alignment component (40) carrying the insertion-connector component (32).

8. The hitch component according to one of the preceding claims,
**characterized in that** the insertion-connector component (32) and/or the alignment component (40), relative to the hitch component body (24), is respectively rotationally movable around two insertion-connector axes (SD1, SD2) that are arranged with a spacing from one another, are parallel to one another, and proceed in a vertical direction (DH) of the hitch component body (27); and is arranged translationally movably along a trajectory (ST) orthogonal to the insertion-connector rotation axes (SD1, SD2).

9. The hitch component according to Claim 8,
**characterized in that** the spacing of the insertion-connector rotation axes (SD1, SD2) is modifiable thanks to the translational mobility of the insertion-connector component (32) and/or of the alignment component (40); and/or the two insertion-connector rotation axes (SD1, SD2) are arranged translationally movably together.

10. The hitch component according to Claim 8 or 9,
**characterized in that** at least one insertion-connector rotation axis (SD1, SD2) is provided at a distance from the longitudinal center axis of the hitching member.

11. The hitch component according to Claim 10,
**characterized in that** in a state free of external forces, both insertion-connector rotation axes (SD1, SD2) are provided at a distance from the hitching member (20).

12. The hitch component according to one of Claims 8 to 11,
**characterized in that** the insertion-connector component (32) and/or the alignment component (40) is arranged relative to a support component (90, 90a, 90b) rotatably around a first of the two insertion-connector rotation axes (SD1); and the support component (90, 90a, 90b) is arranged relative to the hitch component body (27) rotatably around the second insertion-connector rotation axis (SD2).

13. The hitch component according to Claim 12,
**characterized in that** the insertion-connector component (32) and/or the alignment component (40) is translationally displaceable relative to the support component (90b) along the trajectory (ST) orthogonal to the insertion-connector rotation axes (SD1, SD2).

14. The hitch component according to Claim 13,
**characterized in that** the insertion-connector component (32) is displaceable relative to the support component (90b), against the return force of a return device (92), along the trajectory (ST) orthogonal to the insertion-connector rotation axes (SD1, SD2).

15. The hitch component according to Claim 13 or 14,
**characterized in that** the insertion-connector component (32) is guided to move along the trajectory (ST) along a plurality of parallel guidance apparatuses arranged with a spacing from one another.

## Revendications

1. Composant d'accouplement (24) d'un dispositif d'accouplement (10) pour relier temporairement un véhicule tracteur (12) à un véhicule tracté pour former un train de véhicules, dans lequel le composant d'accouplement (24) est adapté pour être disposée sur un véhicule porteur parmi un véhicule tracteur et un véhicule tracté et peut être couplée à un autre composant d'accouplement (14) pour former une connexion d'accouplement temporaire et amovible, qui est adaptée pour être disposé sur l'autre véhicule respectif, dans lequel la connexion d'accouplement est adaptée pour transmettre une force de traction qui fait que le véhicule tracté est traîné dans le train de véhicules, le composant d'accouplement (24) comprenant :
- une barre d'accouplement en tant que corps de composant d'accouplement (27) avec un élément d'accouplement (20) prévu sur celui-ci pour établir un engagement de connexion d'accouplement avec un élément d'accouplement de l'autre composant d'accouplement (14),
- un composant de connecteur (32) avec au moins une formation de connecteur (36) en tant qu'interface d'une ligne d'alimentation du véhicule porteur pour la transmission d'énergie et/ou d'informations, dans lequel le composant de connecteur (32) est conçue pour former une connexion amovible temporaire de transmission d'énergie et/ou d'informations avec un autre composant de connecteur (30) de l'autre composant d'accouplement (14),
- un composant d'alignement (40) formée séparément du corps de composant d'accouplement (27) et de l'élément d'accouplement (20) et disposé sur le corps de composant d'accouplement (27), qui porte le composant de connecteur (32),
dans lequel le composant d'alignement (40) présente une formation d'alignement (44) et est mobile par rapport au corps de composant d'accouplement (27), de sorte que la formation d'alignement (44) du composant d'alignement (40) est adaptée pour l'alignement du composant de connecteur (32) en vue de la préparation d'une connexion à enfichage pour un engagement par complémentarité de forme avec une autre formation d'alignement (42) d'un autre composant d'alignement (38) de l'autre composant d'accouplement (14),
dans lequel le composant de connecteur (32) peut être déplacée par rapport au composant d'alignement (40) et par rapport au corps de composant d'accouplement (27) entre une position de rangement, dans lequel sa au moins une formation de connecteur (36) n'est pas accessible pour établir une connexion par connecteur, et une position d'attente de connexion dans lequel sa au moins une formation de connecteur (36) est accessible pour établir une connexion par connecteur,
**caractérisé en ce que** le composant de connecteur (32) peut pivoter entre la position de rangement et la position d'attente de connexion.

2. Composant d'accouplement selon la revendication 1,
**caractérisé en ce que** le composant de connecteur (32) est guidé sur un élément de réception (82) de manière à être mobile par rapport à celui-ci.

3. Composant d'accouplement selon la revendication 2,
**caractérisé en ce qu'**il est prévu sur le composant de réception (82) un composant de guidage (86) qui est mobile à la fois par rapport au composant de réception (82) et par rapport au composant de connecteur (32), dans lequel il est guidé sur le composant de réception (82) de manière à être mobile le long d'une trajectoire de guidage (FT) entre une position de départ et une position finale et dans lequel il est accouplé au composant de connecteur (32) de manière à se déplacer ensemble, e sorte que lorsque l'élément de guidage (86) est dans la position de départ, le composant de connecteur (32) est dans la position de rangement, et lorsque l'élément de guidage (86) est dans la position finale, le composant de connecteur (32) est dans la position d'attente de connexion.

4. Composant d'accouplement selon la revendication 3,
**caractérisée en ce que** le composant de guidage (86) présente une section d'appui (86a) qui est adaptée pour venir en appui contre un composant (38) de l'autre véhicule respectif du véhicule tracteur et du véhicule tracté portant le composant de connecteur supplémentaire (30).

5. Composant d'accouplement selon la revendication 4,
**caractérisée en ce que** la section d'appui (86a) est adaptée pour s'appuyer contre un composant (38) de l'autre composant d'accouplement (14) ou de l'autre composant d'alignement (38).

6. Composant d'accouplement selon l'une des revendications précédentes,
**caractérisé en ce qu'**au moins une formation de connecteur (36) du composant de connecteur (32) est située derrière un composant de recouvrement (84) dans une direction d'enfichage (VT) dans lequel une connexion par enfichage avec le composant de connecteur (32) pourrait fondamentalement être établie uniquement sur la base de la conception de la formation de connecteur (36), lorsque le composant de connecteur (32) est dans sa position de rangement.

7. Composant d'accouplement selon la revendication 6,
**caractérisée en ce que** le composant de recouvrement (84) présente sur son côté opposé au composant de connecteur (32) en position de rangement de celui-ci la formation d'alignement (44) du composant d'alignement (40) portant le composant de connecteur (32).

8. Composant d'accouplement selon l'une des revendications précédentes,
**caractérisée en ce que** le composant de connecteur (32) et/ou le composant d'alignement (40) est disposée de manière à pouvoir tourner par rapport au composant d'accouplement (24), à chaque fois autour de deux axes de rotation de connecteur (SD1, SD2) disposés à distance l'un de l'autre, parallèles entre eux et s'étendant dans la direction de hauteur (DH) du corps de composant d'accouplement (27), et est disposée de manière à pouvoir être déplacée en translation le long d'une trajectoire (ST) orthogonale aux axes de rotation d'enfichage (SD1, SD2).

9. Composant d'accouplement selon la revendication 8,
**caractérisée en ce que** la distance entre les axes de rotation de connecteur (SD1, SD2) est variable en raison de la mobilité en translation du composant de connecteur (32) et/ou du composant d'alignement (40) et/ou **en ce que** les deux axes de rotation de connecteur (SD1, SD2) sont disposés de manière à être mobiles en translation ensemble.

10. Composant d'accouplement revendication 8 ou 9,
**caractérisé en ce qu'**au moins un axe de rotation de connecteur (S01, S02) est prévu à une distance de l'axe central longitudinal de l'élément d'accouplement.

11. Composant d'accouplement selon la revendication 10,
**caractérisé en ce que,** dans un état exempt de forces extérieures, les deux axes de rotation de connecteur (SD1, SD2) sont prévus espacés de l'élément d'accouplement (20).

12. Composant d'accouplement selon l'une des revendications 8 à 11,
**caractérisé en ce que** le composant de connecteur (32) et/ou le composant d'alignement (40) est disposé de manière à pouvoir tourner par rapport à un composant de support (90, 90a, 90b) autour d'un premier des deux axes de rotation de connecteur (SD1) et **en ce que** le composant de support (90, 90a, 90b) est disposé de manière à pouvoir tourner par rapport au corps de composant d'accouplement (27) autour du deuxième axe de rotation de connecteur (SD2).

13. Composant d'accouplement selon la revendication 12,
**caractérisée en ce que** le composant de connecteur (32) et/ou le composant d'alignement (40) est déplaçable en translation par rapport au composant de support (90b) le long de la trajectoire (ST) orthogonale aux axes de rotation de connecteur (SD1, SD2).

14. Composant d'accouplement selon la revendication 13,
**caractérisé en ce que** le composant de connecteur (32) est déplaçable par rapport au composant de support (90b) contre la force de rappel d'un dispositif de rappel (92) le long de la trajectoire (ST) orthogonale aux axes de rotation de connecteur (SD1, SD2).

15. Composant d'accouplement selon la revendication 13 ou 14,
**caractérisé en ce que** le composant de connecteur (32) est guidé le long d'une pluralité de dispositifs de guidage (94) parallèles et espacés pour le déplacement le long de la trajectoire (ST).
